# EUROPEAN PATENT SPECIFICATION

(11) **EP 3 355 652 B1**
(45) Date of publication and mention of the grant of the patent: **23.03.2022**
(21) Application number: 16862199.3
(22) Date of filing: 04.11.2016
(51) Int. Cl.: H04W 76/27, H04W 88/02, H04W 88/08

(54) **USER EQUIPMENT, BASE STATION, AND METHODS FOR CONNECTION ESTABLISHMENT**
BENUTZERVORRICHTUNG, BASISSTATION UND VERFAHREN FUER EINEN VERBINDUNGSAUFBAU
DISPOSITIF D'UTILISATEUR, STATION DE BASE, ET PROCÉDÉS D'ÉTABLISSEMENT DE CONNEXION

(30) Priority: 05.11.2015 JP 2015218015; 12.05.2016 JP 2016096521; 14.07.2016 JP 2016139715
(43) Date of publication of application: 01.08.2018
(73) Proprietor: NTT Docomo, Inc., Tokyo 100-6150 (JP)
(72) Inventor: TAKAHASHI, Hideaki, Tokyo 100-6150 (JP); HAPSARI, Wuri Andarmawanti, Tokyo 100-6150 (JP)
(74) Representative: Hoffmann Eitle
(86) International application number: PCT/JP2016/082807
(87) International publication number: WO 2017/078140

(56) References cited:
- EP-A1- 2 757 856
- EP-A1- 2 804 441
- WO-A1-2008/114183
- WO-A1-2008/131401
- WO-A1-2013/144606
- WO-A2-2008/087524
- WO-A2-2008/087524
- JP-A- 2015 156 524
- US-A1- 2014 334 371
- ERICSSON: 'Further updates to solution 6.5' 3GPP TSG-SA WG2#111 S2-153179, [Online] 23 October 2015, XP051013389 Retrieved from the Internet: <URL:http://www.3gpp.org/ftp/tsg_ sa/WG2_Arch/TSGS2_111_Chengdu/Docs/S2-15317 9. zip>
- NTT DOCOMO, INC.: 'Work on user plane based solution with AS information stored in RAN' 3GPP TSG-RAN WG2#92 R2-156424, [Online] 20 November 2015, XP051005843 Retrieved from the Internet: <URL:http://www.3gpp.org/ftp/tsg_ ran/WG2 RL2/TSGR2_92/Docs/R2-156424.zip>

## Description

### TECHNICAL FIELD

The present invention relates to a technique in which each of a user equipment UE and a base station eNB in a mobile communication system retains a UE context.

### BACKGROUND ART

In an LTE system, as a connected state of a user equipment UE (hereinafter referred to as a "UE") with a base station eNB (hereinafter referred to as an "eNB"), there are two states, that is, a radio resource control (RRC) idle state (RRC_Idle) and an RRC connected state (RRC_Connected).

When the UE is connected to a network, a UE context is generated by a mobility management entity (MME) on a core NW side, and in the RRC connected state, the UE context is retained in a UE and an eNB with which the UE is connected. The UE context is information including bearer-related information, security-related information, and the like.

When the UE performs transition between the RRC idle state and the RRC connected state, signaling of call control including the core NW side frequently occurs, and a method of reducing the signaling is a problem.

For example, when the UE transitions from the RRC connected state to the RRC idle state, signaling illustrated in Fig. 1 occurs (Non-Patent Document 1 or the like). The case of Fig. 1 is a case in which an eNB 2 detects that communication of a UE 1 is not performed for a predetermined time, disconnects a connection with the UE 1, and transitions to the RRC idle state.

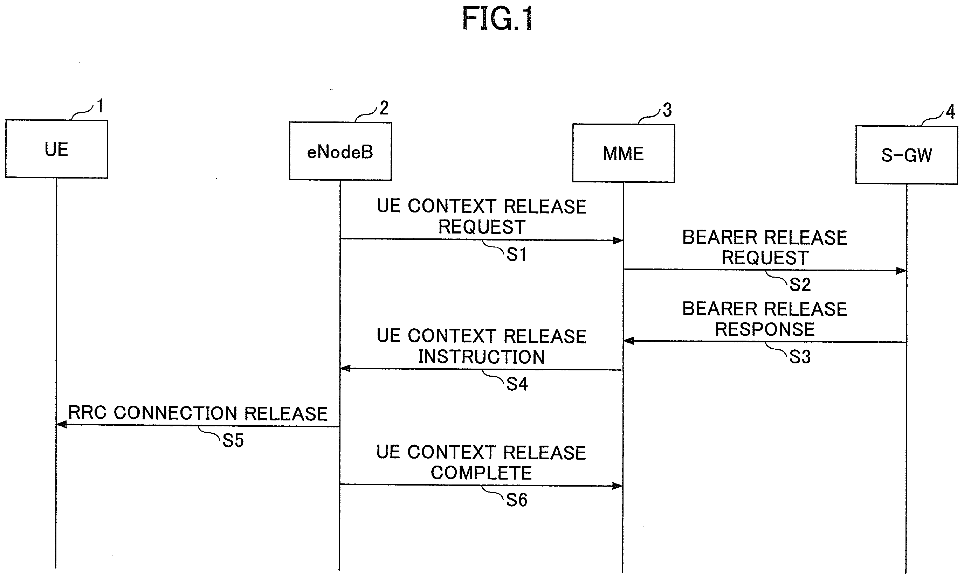

In Fig. 1, the eNB 2 transmits a UE context release request to an MME 3 (step 1). The MME 3 transmits a bearer release request (Release Access Bearers Request) to a serving gateway (S-GW 4) (step 2), and the S-GW 4 transmits a bearer release response (Release Access Bearers Response) to the MME 3 (step 3).

The MME 3 transmits a UE context release command to the eNB 2 (step 4). The eNB 2 transmits an RRC connection release to the UE 1 (step 5), releases the UE context for the UE 1, and transitions to the RRC idle state. Further, the eNB 2 releases the UE context and transmits a UE context release complete to the MME 3 (step 6).

### CITATION LIST

### NON-PATENT DOCUMENT

Non-Patent Document 1: 3GPP TS 36.413 V12.4.0 (2014-12)
Non-Patent Document 2: 3GPP TSG RAN Meeting #66 RP-142030 Maui, USA, 8th-llth December 2014
Non-Patent Document 3: 3GPP TR 23.720 VI.1.0 (2015-10)
Non-Patent Document 4: 3GPP TS 36.331 V12.6.0 (2015-06)
Non-Patent Document 5: 3GPP TS 36.321 V12.7.0 (2015-09)
Non-Patent Document 6: 3GPP TS 24.301 V13.6.1

WO 2008/087524 A2 discloses an approach for context recovery. A radio link failure condition of a wireless link employed by a mobile unit is detected. An identifier of the mobile unit is received. A determination is whether the mobile unit can re-use connection parameters that were established prior to the failure condition. The mobile unit is instructed to re-use the connection parameters based on the determination.

EP 2 804 441 A1 discloses network nodes, methods and a computer program product. A wireless telecommunications network node method, comprises: receiving a request from a radio access node to provide a context to enable the radio access node to support communications with a user equipment; determining whether a context identifier has been allocated for use by the user equipment and, if not, allocating a context identifier for use with requests to provide a context for the user equipment; and providing a context together with the context identifier to the radio access node. In this way, each context within the wireless telecommunications network can be associated with a particular user equipment, which enables these contexts to be easily identified by the network thereafter with minimal effort.

EP 2 757 856 A1 discloses a method for optimization of User Equipment context management in a mobile communication system wherein a connection referred to as RRC connection between an User Equipment UE and a Radio Access Network RAN node can be released at transition from active to idle state and reestablished at transition back from idle to active state, a method wherein an UE context is maintained at said UE and at said RAN node upon release of said RRC connection, said UE context being identified by context identifier information shared by said UE and said RAN node.

WO 2008/114183 A1 discloses an apparatus for facilitating handover failure recovery which may include a handover management element configured to receive, at a target node, a handover request from a source node regarding the handover of communications with a mobile terminal. The handover request may include identity information indicative of the mobile terminal. The identity information may be the identity information used to identify the mobile terminal to the source node during establishment of the original connection between the source node and the mobile terminal. The handover management element may be further configured to receive a request for a connection from the mobile terminal subsequent to a radio link failure and prior to handover completion. Based on matching the identity information from the request for connection and the identity information received from the source node, the target node may establish communication with the mobile terminal based on access stratum configuration information used by the source node.

US 2014/0334371 A1 discloses a method for transmitting and receiving data at a base station in a wireless communication system including the steps of: receiving a performance report from a terminal; determining whether the addition of a serving cell is necessary; when the addition of the serving cell is necessary, transmitting a request for receiving a cell identifying signal to one or more other base stations on the basis of the received performance report; and transmitting a request for transmitting the cell identifying signal to the terminal.

### SUMMARY OF THE INVENTION

The invention is set out in the appended claims.

The subject-matter of the following description and figures, even if indicated as examples, aspects or embodiments etc., does not or does not fully correspond to the invention as claimed. One or more features present in the independent claims are missing in the examples, aspects or embodiments etc., for example due to the use of expressions like 'may', 'preferably', 'optional(ly)', 'can', 'could', 'as an/for example' etc., rendering one or more features present in the independent claims as optional. Therefore, the subject-matter of the following description and figures is not or not completely covered by the claimed invention and is present for illustration purposes only.

### PROBLEM TO BE SOLVED BY THE INVENTION

In a signaling procedure illustrated in Fig. 1, signaling frequently occurs at the time of the RRC connection release, and even when the UE transitions from the RRC idle state to the RRC connected state again, signaling frequently occurs.

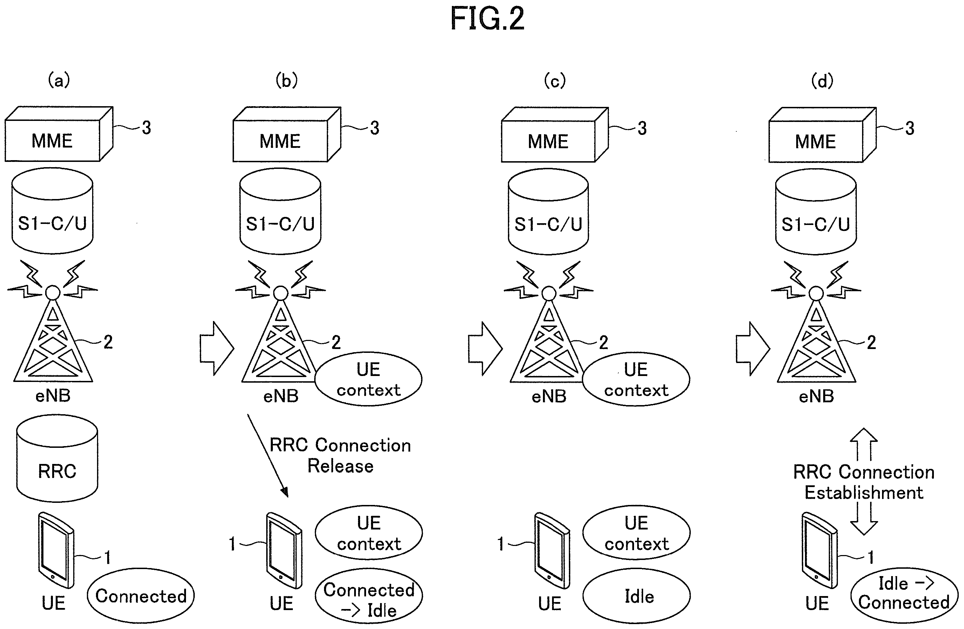

In order to reduce the signaling when the UE performs transition between the RRC idle state and the RRC connected state, a method of retaining the UE context in the eNB and the UE and reusing the UE context when the UE performs transition of the RRC connected state -> the RRC idle state -> the RRC connected state within the same eNB has come under review (Non-Patent Document 2). An example of a procedure considered in the method will be described with reference to Fig. 2.

(a) Fig. 2 illustrates a state in which the UE 1 is in the RRC connected state, and a connection of S1-C related to the UE 1 and a connection of Sl-U (S1-C/U in Fig. 2) are established on the core NW side. The connection of S1-C is an S1 connection in which a C-plane signal is transmitted, and the connection of Sl-U is an S1 connection passing through a U-plane.

The UE 1 transitions from the state illustrated in (a) to the RRC idle state in accordance with a RRC connection release as illustrated in (b) and (c). At this time, the UE context for the UE 1 is retained in the eNB 2, the UE context for the eNB 2 is also retained in the UE 1, and the Sl-C/U connection for the UE 1 is also maintained. Then, as illustrated in (d), when the UE 1 transitions to the RRC connected state, the eNB 2 and the UE 1 reuse the retained UE context, and thus the RRC connection is established while reducing the signaling.

Here, (d) of Fig. 2 illustrates an example in which the UE 1 and the eNB 2 establish the RRC connection using the retained UE contexts, but generally, the UE does not recognize whether or not the eNB supports a function of retaining a reusable UE context.

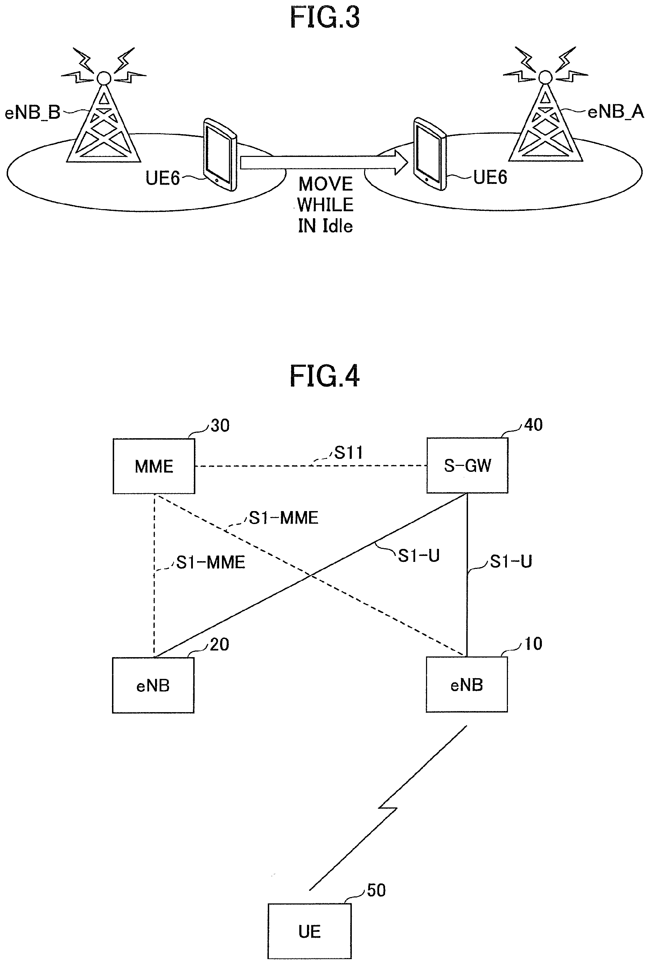

For example, when a UE 6 retaining the UE context used for the connection with an eNB_B moves to an eNB_A in the RRC idle state as illustrated in Fig. 3, it is unclear to the UE 6 whether or not the eNB_A supports the UE context retention function.

In this regard, for example, it is considered that the UE constantly performs an operation of reusing the UE context when transition from the RRC idle state to the RRC connected state is performed. As the operation of reusing the UE context, an operation of giving a notification of information indicating that the UE retains the UE context to the eNB is considered. However, the eNB that does not support the UE context retention function is unable to detect information related to such a notification. In order to perform a stable operation, it is desirable that the UE performs the operation of reusing the UE context when the eNB of the serving cell is confirmed to have the UE context retention function.

The present invention was made in light of the foregoing, and it is an object of the present invention to provide a technique capable of enabling a user equipment to determine whether or not a base station has a function of reusing context information in a mobile communication system in which a function of performing connection establishment by reusing context information retained in each of the user equipment and the base station is supported.

### EFFECT OF THE INVENTION

According to the embodiment of the present invention, a technique capable of enabling a user equipment to determine whether or not a base station has a function of reusing context information in a mobile communication system in which a function of performing connection establishment by reusing context information retained in each of the user equipment and the base station is supported is provided.

### BRIEF DESCRIPTION OF DRAWINGS

Fig. 1 is a diagram illustrating an example of a signaling sequence when transition to the RRC idle state is performed;
Fig. 2 is a diagram for describing an example of a process of retaining a UE context;
Fig. 3 is a diagram for describing a problem;
Fig. 4 is a configuration diagram of a communication system according to an embodiment of the present invention;
Fig. 5 is a diagram illustrating an example of a processing sequence of the entire system according to a first embodiment;
Fig. 6 is a diagram illustrating an example of a processing sequence of the entire system according to the first embodiment;
Fig. 7 is a flowchart for describing an exemplary operation of a UE according to the first embodiment;
Fig. 8 is a flow chart for describing an exemplary operation of a UE according to the first embodiment;
Fig. 9 is a diagram illustrating a message example of a RA response;
Fig. 10 is a diagram illustrating a message example of a RA response;
Fig. 11 is a diagram illustrating an example of a processing sequence of the entire system according to a second embodiment;
Fig. 12 is a diagram for describing a connection establishment procedure according to the second embodiment;
Fig. 13 is a diagram for describing a connection release procedure according to the second embodiment;
Fig. 14 is a diagram illustrating another example of a processing sequence of the entire system according to the second embodiment;
Fig. 15A is a diagram illustrating a specification modification of an RRC Connection Request message;
Fig. 15B is a diagram illustrating a specification modification of an RRC Connection Request message;
Fig. 16A is a diagram illustrating a specification modification of an RRC Connection Setup message;
Fig. 16B is a diagram illustrating a specification modification of an RRC Connection Setup message;
Fig. 17 is a diagram illustrating a specification modification of an RRC Connection Setup Complete message;
Fig. 18A is a diagram illustrating a first specification modification of an RRC Connection Release message;
Fig. 18B is a diagram illustrating a first specification modification of an RRC Connection Release message;
Fig. 19A is a diagram illustrating a second specification modification of an RRC Connection Release message;
Fig. 19B is a diagram illustrating a second specification modification of an RRC Connection Release message;
Fig. 20 is a flowchart for describing an exemplary operation of a UE according to the second embodiment;
Fig. 21 is a flowchart for describing an exemplary operation of a UE according to the second embodiment;
Fig. 22 is a flow chart for describing an exemplary operation of a UE according to the second embodiment;
Fig. 23 is a diagram illustrating a specification modification of an SIB 2;
Fig. 24 is a diagram illustrating a specification modification of an SIB 2;
Fig. 25 is a flowchart for describing an exemplary operation 1 of a UE when an SIB 2 is received;
Fig. 26 is a flow chart for describing an exemplary operation 2 of a UE when an SIB 2 is received;
Fig. 27 is a diagram illustrating a specification modification of an SIB 2;
Fig. 28 is a diagram illustrating a specification modification of an SIB 2;
Fig. 29 illustrates a specification modification of 3GPP TS 24.301;
Fig. 30 is a diagram illustrating a specification modification of 3GPP TS 24.301;
Fig. 31 is a diagram illustrating a specification modification of 3GPP TS 24.301;
Fig. 32 is a diagram illustrating a specification modification of 3GPP TS 24.301;
Fig. 33 is a diagram for describing a specification modification of 3GPP TS 24.301;
Fig. 34 is a configuration diagram of an MME and an S-GW;
Fig. 35 is a configuration diagram of a UE 50;
Fig. 36 is a HW configuration diagram of the UE 50;
Fig. 37 is a configuration diagram of an eNB 10; and
Fig. 38 is a HW configuration diagram of the eNB 10.

### MODE(S) FOR CARRYING OUT THE INVENTION

Hereinafter, exemplary embodiments of the present invention will be described with reference to the appended drawings. Further, embodiments to be described below are merely examples, and an embodiment to which the present invention is applied is not limited to the following embodiments. For example, in the present embodiment, description will proceed with an LTE system, but the present invention can be applied to various schemes without being limited to LTE. Further, in this specification and claims set forth below, a term "LTE" is not limited to a specific Rel (release) of 3GPP unless otherwise specified. Further, "LTE" includes "5G."

Examples of various schemes mentioned above include SUPER 3G, IMT-advanced, 4G, 5G, future radio access (FRA), W-CDMA (registered trademark), GSM (registered trademark), CDMA 2000, ultra mobile broadband (UMB) IEEE 802.11 (Wi-Fi), IEEE 802.16 (WiMAX), IEEE 802.20, ultra-wide band (UWB), Bluetooth (registered trademark), and a next generation system expanded on the basis of them.

### (Overall system configuration)

Fig. 4 is a diagram illustrating an exemplary configuration of a communication system according to an embodiment of the present invention. As illustrated in Fig. 4, a communication system of the present embodiment includes an eNB 10, an eNB 20, an MME 30, an S-GW 40, and a UE 50. Fig. 4 illustrates only parts related to the present embodiment in connection with the core network (EPC).

The UE 50 is a user equipment such as a mobile phone. Each of the eNBs 10 and 20 is a base station. The MME 30 is a node device that accommodates an eNB and performs location registration, paging, mobility control such as handover, bearer establishment/deletion, and the like. Further, C-plane control such as mobility control or bearer establishment/deletion is performed by message transmission and reception of the non-access-stratum (NAS) layer which is a higher layer of the radio resource control (RRC) layer between the UE 50 and the MME 30.

The S-GW 40 is a node device that relays user data (U-plane data). A system including the MME 30 and the S-GW 40 is referred to as a communication control device. The MME 30 and the S-GW 40 may be configured as a single device and may be referred to as a communication control device.

As illustrated in Fig. 4, the MME 30 and the eNBs 10 and 20 are connected via an S1 MME interface, and the S-GW 40 and the eNBs 10 and 20 are connected via an Sl-U interface. Dotted connecting lines indicate control signal interfaces, and solid connecting lines indicate user data transfer interfaces.

The present embodiment is under the assumption of a scheme in which as described above, even when the UE 50 transitions from the RRC connected state to the RRC idle state within the same eNB, the UE context of the UE 50 is retained in the eNB, and the UE context related to the connection with the eNB is also retained in the UE 50. As described above, the number of signals can be reduced through this scheme.

In the present embodiment, as an example of the above scheme, a scheme in which a new RRC state called RRC-Suspended (and ECM-Suspended) which is a scheme described in Non-Patent Document 3 is described is defined will be described as a first embodiment, and a scheme in which the UE context is reused without defining a new RRC state will be described as a second embodiment.

### (First embodiment)

First, the first embodiment will be described. As described above, in the scheme of the first embodiment, in addition to the conventional RRC-Idle (RRC idle state) and RRC-connected (RRC connected state) of the related art, a state called RRC-Suspended (called an RRC retention state) is added. In the RRC retention state, each of the UE and the eNB retains the UE context used for a connection in the RRC connected state before the RRC retention state. Then, when transition from the RRC retention state to the RRC connected state is performed, the RRC connection establishment is performed using the retained UE context. A detailed procedure and the like are described in Non-Patent Document 3. However, in the present embodiment, the UE can determine whether or not the eNB supports the UE context retention function. Such functions are not described in Non-Patent Document 3 at all.

### <First embodiment: overall sequence example>

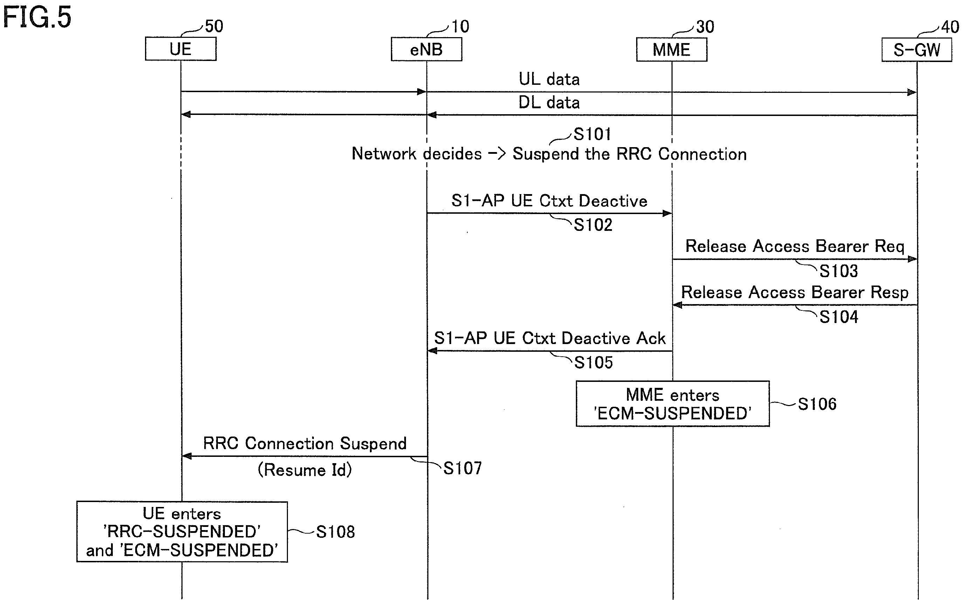

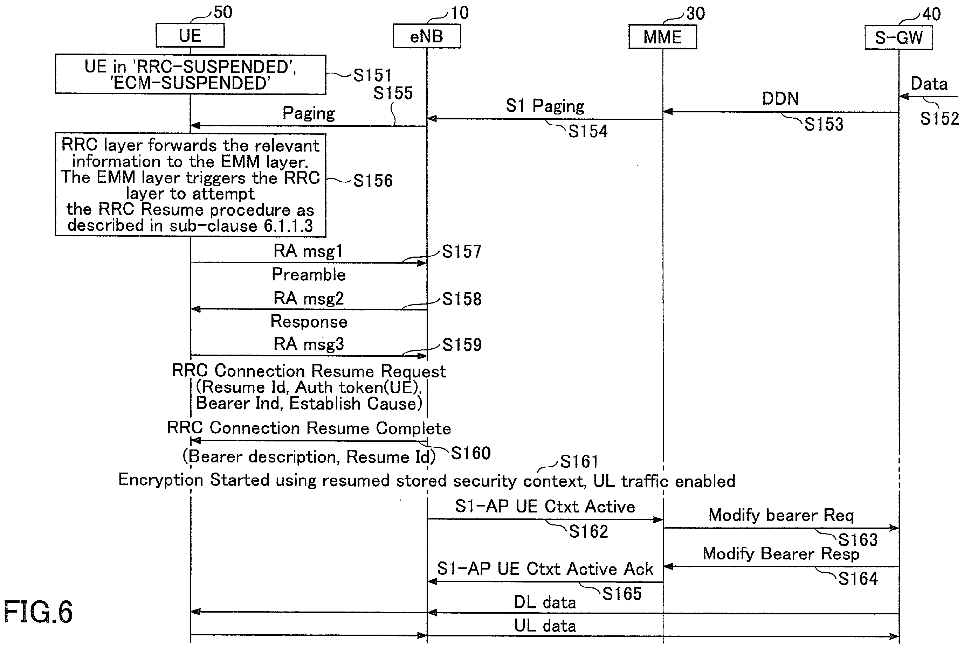

First, as a sequence example of the entire communication system according to the first embodiment, a processing sequence when the UE 50 transitions from the RRC idle state to the RRC retention state (and the ECM retention state) will be described with reference to Fig. 5. Since the overall processing sequence illustrated in Figs. 5 and 6 is disclosed in Non-Patent Document 3, an overview will be described here.

In step 101, the eNB 10 decides to retain the RRC connection. In step 102, the eNB 10 transmits a message indicating that the RRC connection of the UE 50 is suspended to the MME 30. The MME 10 and the eNB 30 retain the UE context.

In step 105, the MME 30 transmits Ack with respect to step 102 through messages of steps 103 and 104. In step 106, the MME 30 enters an ECM-SUSPEND state.

In step 107, the eNB 10 transmits an RRC connection suspend message to the UE 50 and causes the UE 50 to transition to the RRC retention state (step 108). A Resume ID is included in the RRC connection suspend message. The Resume ID is an identifier used when the RRC connection is resumed next time. In the RRC retention state, each of the UE 50 and the eNB 10 stores the UE context.

Here, in the present embodiment, the UE context retrained in each of the UE 50 and the eNB 10 includes, for example, an RRC configuration, a bearer configuration (including RoHC state information or the like), an access stratum (AS) security context, L2/L1 parameters (MAC configuration, PHY configuration, and the like), and the like.

Further, the UE 50 and the eNB 10 may retrain the same information as the UE context, and the UE 50 may retrain only information of the UE context that is necessary for the connection with the eNB 10, and the eNB 10 may retain only information of the UE context necessary for the connection with the UE 50.

More specifically, in the RRC idle state, for example, each of the UE 50 and the eNB 10 retains RadioResourceConfigDedicated information carried through the RRC Connection Setup, capability information carried through the RRC Connection Setup Complete, and security-related information (key information or the like), security-related information carried through the RRC Security Mode Command, configuration information carried through the RRC Connection Reconfiguration, and the like as the UE context. These are merely examples, and information retained as the UE context is not limited thereto, and information may be retrained additionally, or some pieces of the information may not be retained.

Since the UE 10 and the eNB 10 retain such information, when transition from the RRC idle state to the RRC connected state is performed, the RRC connection establishment can be performed without performing transmission and reception of messages such as the RRC Connection Setup Complete, the RRC Security Mode Command, the RRC Security Mode Complete, the RRC Connection Reconfiguration, and the RRC Connection Reconfiguration Complete.

Next, a sequence example in which the UE 50 transitions from the RRC retention state to the RRC connected state will be described with reference to Fig. 6. Fig. 6 illustrates an example in which the UE 50 in the RRC retention state (step 151) receives an incoming call (steps 152 to 155), but this is an example, and even when the UE 50 in the RRC retention state originates a call, a similar process is performed for the reuse of the UE context.

In the UE that has received paging from the eNB 10, in step 156, the RRC resume procedure is activated from the EMM layer (a supplier of the NAS layer). In step 157, the Random Access Preamble is transmitted from the UE 50 to the eNB 10, and in Step 158, the Random Access Response is transmitted from the eNB 10 to the UE 10.

In step 159, the UE 50 transmits an RRC Connection Resume Request message to the eNB 10 as a message 3. In the first embodiment, before the RRC Connection Resume Request message is transmitted, the UE 50 performs a process of determining whether or not the eNB 10 has the context retention function, and this process will be described later in detail.

A Resume ID (resume ID) which is information indicating that the UE 50 retrains the UE context is included in the RRC Connection Resume Request message. The eNB 10 that has received the RRC Connection Resume Request message acquires the UE context of the UE 50 stored in association with the Resume ID included in the message, and resumes the bearer or the like on the basis of the information of the UE context. In step 160, the eNB 10 transmits an RRC Connection Resume Complete message including the Resume ID to the UE 50.

In step 161, the UE 50 and the eNB 10 resumes the stored security context. Then, in steps 162 to 165, a notification of the state change of the UE 50 or the like is transmitted to the MME 30.

### <UE context retention function determination>

As described above with reference to Fig. 6 and the like, the UE 50 uses the Resume ID to give the notification that the UE retains the UE context to the eNB 10. This is on the premise that the eNB 10 supports the UE context retention function (the function of performing the RRC connection reusing the retained UE context).

However, all eNBs need not necessarily support the UE context retention function. For example, the UE 50 is assumed to enter the RRC idle state while retaining the UE context under the control of the eNB 10 and moves to a cell of an eNB-X which does not have the UE context retention function. Here, even when a notification of the information indicating that the UE 50 retains the UE context is given to the eNB-X, the eNB-X is unable to detect the information. In order to perform a stable operation, when the UE 50 is able to check that the eNB of the serving cell has the UE context retention function, it is desirable that the UE 50 perform the UE context retention notification operation described in Fig. 6 and the like.

The first embodiment will be described in connection with an example in which the UE 50 determines whether or not the eNB 10 has the UE context retention function. Examples 1-1 to 1-2 will be described below. In the first embodiment and the second embodiment, the "UE context retention function" is a function of establishing the RRC connection from a state other than the RRC connected state using (or reusing) the retained UE context in the state. Further, when the eNB does not have the UE context retention function or when the eNB does not support the UE context retention function correspond to not only when the eNB does not retrain the UE context retention function as its capability but also when the eNB retains the UE context retention function as its capability but stops the function.

### <Example 1-1>

In an example 1-1, the eNB 10 broadcasts information indicating whether or not the eNB 10 supports the UE context retention function to the UE 50 through broadcast information. As the broadcast information, an SIB 2 is used. The alternative use of an MIB or an SIB1 as broadcast information is not covered by the invention as claimed.

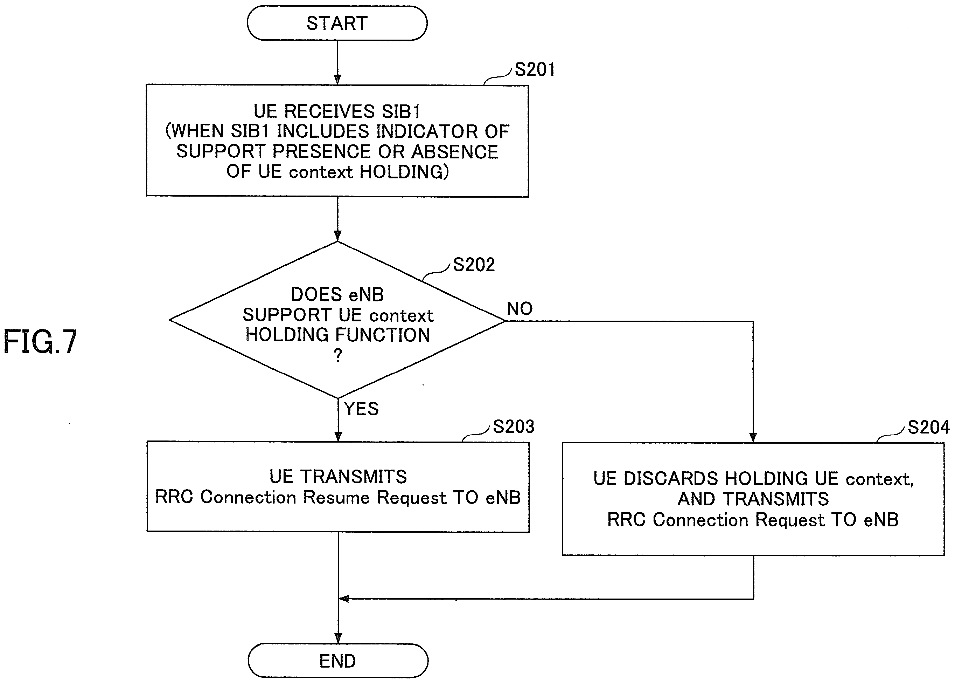

An exemplary operation of the UE 50 related to determination of the UE context retention function will be described with reference to a flowchart of Fig. 7. In the following example, the eNB 10 broadcasts information indicating whether or not the eNB 10 supports the UE context retention function using the SIB1.

In step 201, UE 50 receives the SIB1 from the eNB 10. In step 202, the UE 50 reads the information indicating whether or not the eNB 10 supports the UE context retention function from the SIB1, and the UE 50 determines whether or not the eNB 10 supports the UE context retention function on the basis of the information.

When the determination result of step 202 is Yes (supporting), the process proceeds to step S203, and when the UE 50 performs transition to the RRC connected state in the cell, the UE 50 performs the RRC connection by transmitting the RRC Connection Resume Request message to the eNB 10 as described above.

When the determination result of step 202 is NO (not supporting), the process proceeds to step S204, and when the UE 50 performs transition to the RRC connected state in the cell, the UE 50 drops the retained UE context and performs the RRC connection by transmitting the normal RRC Connection Request to the eNB 10.

### <Example 1-2>

In an example 1-2, the eNB 10 gives a notification indicating whether or not the eNB 10 supports the UE context retention function to the UE 50 through the Random Access Response in the random access procedure.

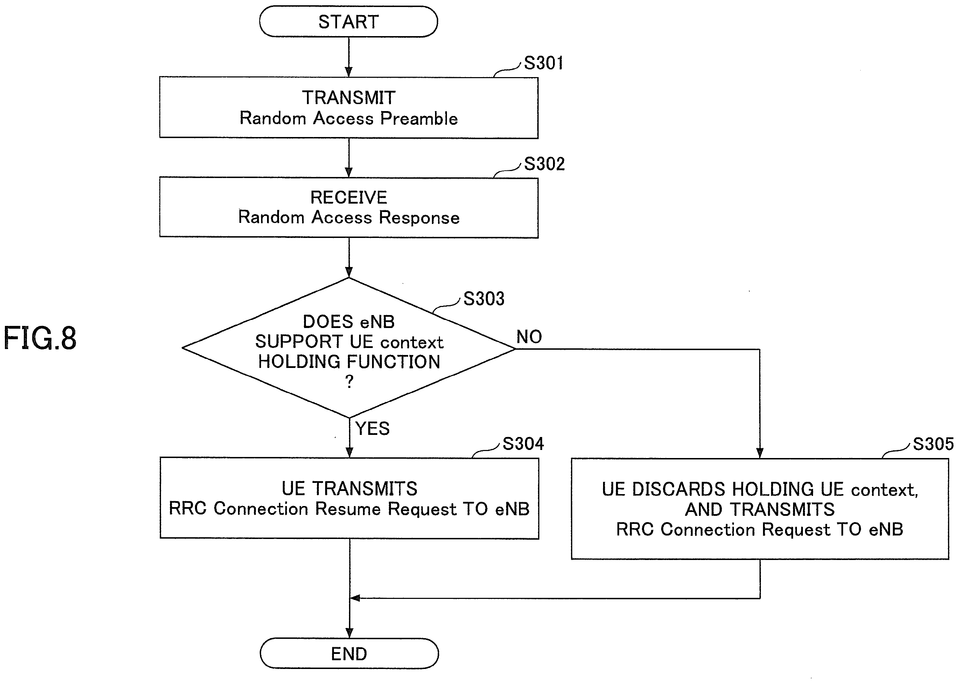

An exemplary operation of the UE 50 in the example 1-2 will be described with reference to a flow chart of Fig. 8. Here, for example, as illustrated in Fig. 6, a situation in which the UE 50 in the RRC retention state transitions to the RRC connected state upon receiving paging (or in order to originate a call) is illustrated.

In step 301, the UE 50 transmits a Random Access Preamble to the eNB 10. In step 302, the UE 50 receives a Random Access Response from the eNB 10. The Random Access Response includes information indicating whether or not the eNB 10 supports the UE context retention function.

In step 303, the UE 50 reads the information indicating whether or not the eNB 10 supports the UE context retention function from the Random Access Response, and the UE 50 determines whether or not the eNB 10 supports the UE context retention function on the basis of the information.

When the determination result of step 303 is Yes (supporting), the process proceeds to step S304, and the UE 50 performs RRC connection by transmitting the RRC Connection Resume Request message to the eNB 10 as described above.

When the decision result of step 303 is No (not supporting), the process proceeds to step S305, the UE 50 drops the retained UE context and performs the RRC connection by transmitting the normal RRC Connection Request to the eNB 10.

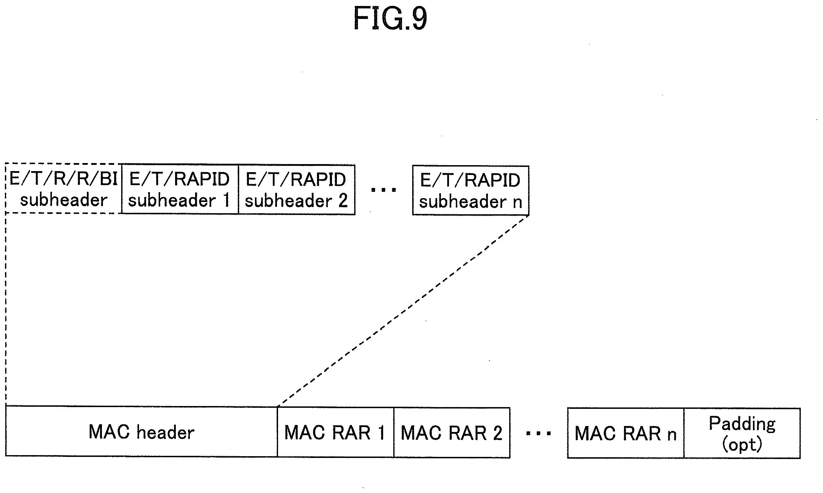

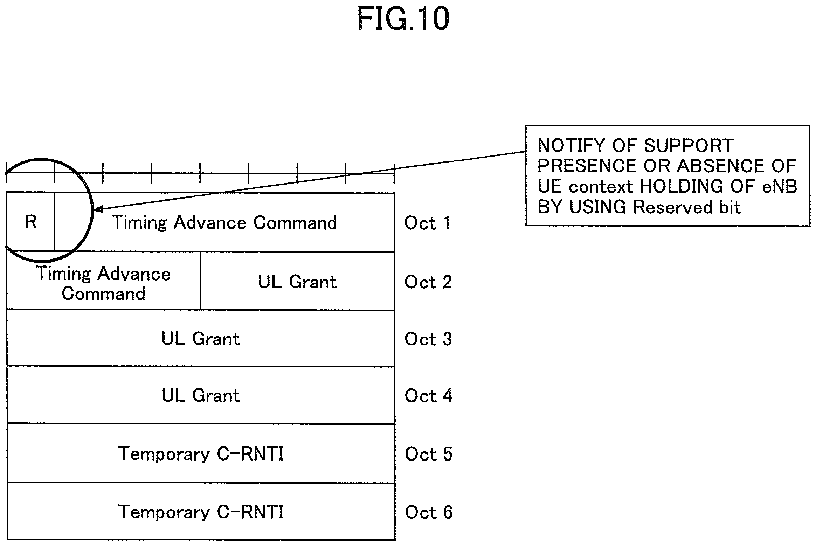

Figs. 9 and 10 illustrate a messages example of the Random Access Response in the example 2 (see Non-Patent Document 5 for an example of a related art). As illustrated in Fig. 9, an MAC RAR is included in an MAC PDU. As illustrated in Fig. 10, in the example 2, the notification of the information indicating whether or not the UE context retention function is supported is given using a reserved bit in the MAC RAR. As an example, a bit of 1 indicates that the UE context retention function is supported, and a bit of 0 indicates that the UE context retention function is not supported. 1 and 0 may be reversed.

### (Second embodiment)

Next, a second embodiment will be described. As described above, the second embodiment relates to a scheme in which a new state such as RRC-Suspended is not defined, and in the RRC idle state, the UE and the eNB retain the UE context, and when transition to the RRC connected state is performed, the retained UE context is reused, and thus the number of signaling can be reduced.

### (Overall sequence example)

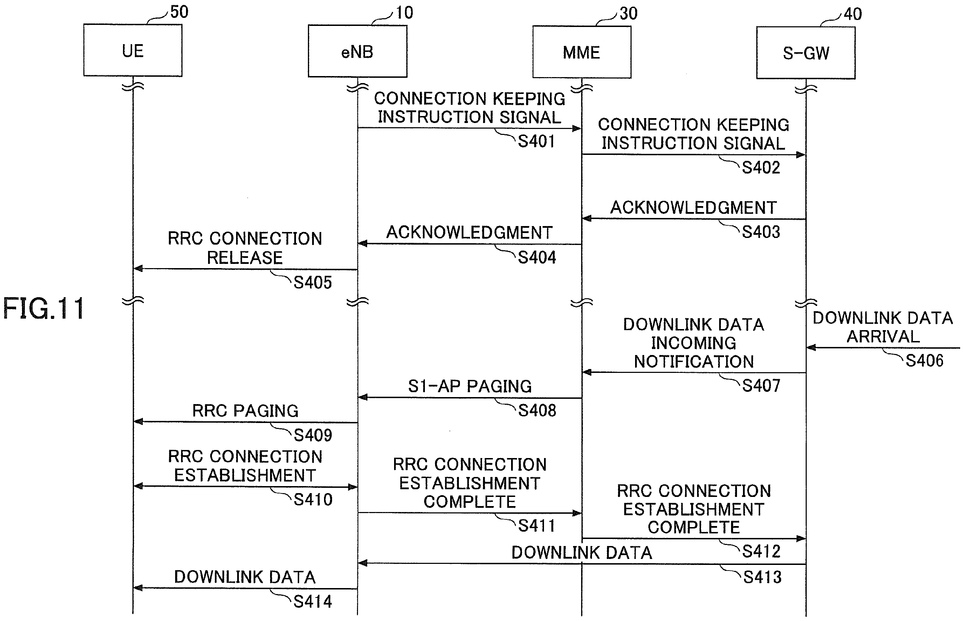

First, as a sequence example of the entire communication system according to the second embodiment, a scheme of performing paging from the MME 30 when there is an incoming call to the UE 50 in the RRC idle state is described. More specifically, a processing sequence when the UE 50 is connected to the eNB 10 to enter the RRC connected state, enters the RRC idle state in the cell subordinate to the eNB 10, and then receives an incoming call in the same cell will be described with reference to Fig. 11.

The process of Fig. 11 is under the assumption that the UE 50 is in the RRC connected state in the cell of the eNB 10, and the Sl-C/U connection related to the UE 50 is established. In Fig. 11, the S1-C connection includes a connection between the eNB 10 and the MME 30 and a connection between the MME 30 and the S-GW 40, and the Sl-U connection includes a connection between the eNB 10 and the S-GW 40. When the connection is established, transmission and reception of a signal (data) related to the UE 50 can be performed between corresponding node devices without performing a connection setup procedure such as a connection establishment signal.

Before the procedure of Fig. 11 is described, an overview of an example of a procedure when the UE 50 is initially connected to the eNB 10 will be described (Non-Patent Document 4). A procedure related to an initial connection can be applied to the first embodiment. At the time of random access of the UE 50, the eNB 10 transmits an RRC Connection Setup to the UE 50, causes the UE 50 to enter the RRC connected state, and receives an RRC Connection Setup Complete from the UE 50. Thereafter, the eNB 10 receives an Initial Context Setup Request from the MME 30, transmits an RRC Security Mode Command to the UE 50, receives an RRC Security Mode Complete from the UE 50, transmits an RRC Connection Reconfiguration to the UE 50, receives an RRC Connection Reconfiguration Complete from the UE 50, and transmits an Initial Context Setup Response to the MME 30. Through this procedure, the UE context is established and retained in the UE 50 and the eNB 10.

As illustrated in Fig. 11, in the RRC connected state, the eNB 10 transmits a connection retention instruction signal to the MME 30 (step 401). Further, the MME 30 transmits the connection retention instruction signal to the S-GW 40 (step 402).

The connection retention instruction signal is a signal for giving an instruction to retain downlink data in the S-GW 40 when there is an incoming call to the UE 50 while maintaining the Sl-C/U connection related to the UE 50 and perform paging from the MME 30.

The S-GW 40 that has received the connection retention instruction signal transmits an acknowledge response indicating that the instruction has been confirmed to the MME 30 (step 403), and the MME 30 transmits an acknowledge response to the eNB 10 (step 404).

The transmission of the connection retention instruction signal related to the UE 50 from the eNB 10 to the MME 30 may be triggered, for example, when an event of causing the UE 50 to transition to the RRC idle state occurs in the eNB 10 or may be performed directly after the UE 50 initially enters the RRC connected state under the control of the eNB 10, and the Sl-C/U connection related to the UE 50 is established.

The event of causing the transition to the RRC idle state is, for example, a case in which it is detected that communication with the UE 50 (uplink and downlink user data communication) has not occurred for a certain period of time due to expiration of a predetermined timer (for example, a UE inactivity timer) but is not limited thereto.

In Fig. 11, the case in which it is detected that communication with the UE 50 (uplink and downlink user data communication) has not occurred for a certain period of time is assumed to be a trigger, and after steps 401 to 404, an RRC connection release is transmitted to the UE 50 to cause the UE 50 to transition to the RRC idle state (step 405) .

In the second embodiment, even when the UE 50 transitions to the RRC idle state, the UE context established at the time of RRC connection is retained in each of the UE 50 and the eNB 10.

Thereafter, downlink data destined for the UE 50 occurs, and the downlink data arrives at the S-GW 40 (step 406). Here, the Sl-U connection has been established, but the S-GW 40 retains the downlink data in a buffer without transferring the downlink data to the eNB 10 on the basis of the connection retention instruction signal received in step 402.

The S-GW 40 transmits a downlink data arrival notification to the MME 30 (step 407), and the MME 30 transmits an S1-AP paging signal destined for the UE 50 to the eNB 10 (step 408). The paging is similar to an existing paging and transmitted to each eNB in a tracking area of the UE 50, but transmission to the eNB 10 is illustrated in Fig. 11.

The eNB 10 that has received the S1-AP paging signal transmits an RRC paging signal to the UE 50 subordinate thereto (step 409).

The UE 50 that has received the RRC paging signal performs an RRC connection establishment procedure and establishes the RRC connection (step 410). Thereafter, the eNB 10 transmits an RRC connection establishment complete which is a signal indicating that the establishment of the RRC connection has been completed to the MME 30 (step 411). The eNB 10 can determine that the RRC connection with the UE 50 has been established, for example, that the eNB 10 has received the RRC Connection Setup Complete from the UE 50.

The MME 30 transmits the RRC connection establishment complete signal to the S-GW 40 (step 412). As a result, the S-GW 40 determines that the RRC connection has been established between the UE 50 and the eNB 10, and starts transfer of the retained downlink data to the eNB 10 using the Sl-U connection related to the UE 50 which is already established (Step 413). The downlink data is transferred from the eNB 10 to the UE 50 (step 414). As described above, the transmission of the downlink data to the UE 50 is started.

The RRC connection establishment procedure in step 410 in Fig. 11 will be described later in detail. In the RRC connection establishment procedure, since the UE context established and retained at the time of RRC connection in each of the UE 50 and the eNB 10 is used, the RRC connection establishment can be performed without performing transmission and reception of messages such as the RRC Security Mode Command, the RRC Security Mode Complete, the RRC Connection Reconfiguration, and the RRC Connection Reconfiguration Complete.

Here, the UE context retrained in each of the UE 50 and the eNB 10 includes, for example, an RRC configuration, a bearer configuration (including RoHC state information and the like), an AS security context (Access Stratum Security Context), L2/L1 parameters (the MAC configuration, the PHY configuration, and the like), and the like.

Further, the UE 50 and the eNB 10 may retrain the same information as the UE context, and the UE 50 may retrain only information of the UE context that is necessary for the connection with the eNB 10, and the eNB 10 may retain only information of the UE context necessary for the connection with the UE 50.

More specifically, in the RRC idle state, for example, each of the UE 50 and the eNB 10 retains RadioResourceConfigDedicated information carried through the RRC Connection Setup, capability information carried through the RRC Connection Setup Complete, and security-related information (key information or the like), security-related information carried through the RRC Security Mode Command, configuration information carried through the RRC Connection Reconfiguration, and the like as the UE context. These are merely examples, and information retained as the UE context is not limited thereto, and information may be retrained additionally, or some pieces of the information may not be retained.

Since the UE 10 and the eNB 10 retain such information as the UE context, when transition from the RRC idle state to the RRC connected state is performed, the RRC connection establishment can be performed without performing transmission and reception of messages such as the RRC Security Mode Command, the RRC Security Mode Complete, the RRC Connection Reconfiguration, and the RRC Connection Reconfiguration Complete.

Further, in the second embodiment, the eNB 10 retains the UE context in a storage unit in association with an identifier (UE identifier) of the UE corresponding to the UE context. There is no limitation to a type of UE identifier, but in the second embodiment, an SAE temporary mobile subscriber identity (S-TMSI) is used as the UE identifier as an example.

### <Example of RRC connection establishment procedure>

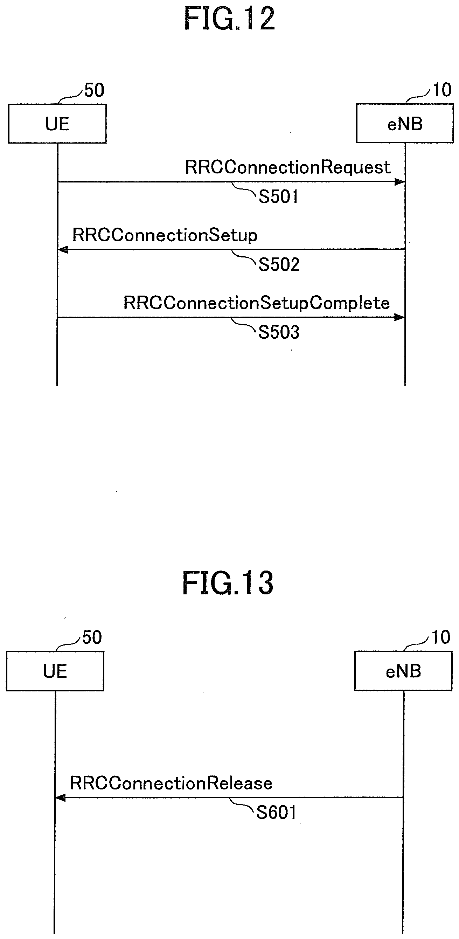

Next, the RRC connection establishment procedure between the UE 50 and the eNB 10 according to the second embodiment will be described with reference to a sequence of Fig. 12. In the sequence illustrated in Fig. 12, the process of step 410 in Fig. 11 is assumed, but the present invention is not limited thereto. For example, the sequence illustrated in Fig. 12 may be the RRC connection establishment procedure at the time of call origination from the UE 50.

It is assumed that before the sequence illustrated in Fig. 12, a Random Access Preamble is transmitted from the UE 50 to the eNB 10, and a Random Access Response is transmitted from the eNB 10 to the UE 50.

In step 501, the UE 50 transmits the RRC Connection Request message (RRC connection request) to the eNB 10 through resources allocated by the UL grant included in the Random Access Response. In the second embodiment, in step 501, the UE 50 gives a notification indicating that the UE 50 retains the UE context using a spare bit (1 bit) in the RRC Connection Request message to the eNB 10. For example, when the bit is set (1), it indicates that the UE 50 retains the UE context. The information indicating that the UE 50 retains the UE context is referred to as "UE context retention information."

Further, in addition to the above bit, a UE identifier (specifically, the S-TMSI) identifying the UE 50 is included in the RRC Connection Request message. The S-TMSI is a temporary identifier of the UE 50 generated from an identifier specific to the UE 50 and output from the MME 30 at the time of location registration of the UE 50 or the like. In the present embodiment, it is assumed that the UE 50 and each eNB are assumed to retrain the S-TMSI identifying the UE 50.

The eNB 10 that has received the RRC Connection Request message in step 501 reads the UE context retention information and the UE identifier from the message, recognizes that the UE 50 identified by the UE identifier retains the UE context, and searches for the UE context corresponding to the UE identifier among a plurality of retained UE contexts from the storage unit. In other words, a UE identifier matching process is performed.

In step 502, When the UE context corresponding to the UE identifier is detected as a result of search, the eNB 10 gives a notification indicating that the eNB 10 retains the UE context of the UE 50 to the UE 50 through the RRC Connection Setup message (RRC connection establishment message) and requests the UE 50 to transmit information for authentication of the UE 50.

The UE 50 that has received the RRC Connection Setup message including the information indicating that the UE context of the UE 50 is retained continuously uses the retained UE context (the bearer, the security key, the configuration, and the like).

Further, the RadioResourceConfigDedicated included in the RRC Connection Setup message includes parameter values related to the bearer, the MAC configuration, the PHY configuration, and the like, but the UE 50 that has received the RRC Connection Setup message including the above notification and request in step 202 ignores parameter values notified of through the RadioResourceConfigDedicated and continuously uses the parameter values of the retained UE context. The parameter values which are notified of may be used without ignoring the parameter values notified of through the RadioResourceConfigDedicated. As a result, when the parameter values which are already retained are changed by the eNB 10, the change can be reflected.

Next, in step 503, the UE 50 includes authentication information such as an Authentication token, a shortMAC-I, and the like in the RRC Connection Setup Complete message, and transmits the resulting RRC Connection Setup Complete message to the eNB 10. The authentication information such as the Authentication token and the short MAC-I is information used for the eNB 10 to authenticate the UE 50.

The eNB 10 that has received the RRC Connection Setup Complete message authenticates that the UE 50 is a correct UE corresponding to the UE context searched using the UE identifier using the authentication information included in the message. Thereafter, the UE 50 and the eNB 10 establish (resume) a connection using the retained UE contexts. Further, when the connection is established (resumed) using the retained UE context, step 503 need not be necessarily performed, and step 503 may not be performed.

### <Example of RRC connection release procedure>

In the second embodiment, when the UE 50 receives the RRC Connection Release message from the eNB 10 and performs transition to the RRC idle state, the UE context may be constantly retrained, or the UE context may be retrained only when information for giving an instruction to retain the UE context is included in the RRC Connection Release message. An example of the latter will be described below.

As illustrated in Fig. 13, when the eNB 10 causes the UE 50 to transition to the RRC idle state, the eNB 10 transmits the RRC Connection Release message to the UE 50 (step 601).

The RRC Connection Release message includes instruction information (indication) for instructing the UE 50 to continuously retain the UE context in the RRC idle state. For the instruction information, a new indication may be included in the message, or a spare bit of an existing release cause may be used. A specific example will be described later.

When the instruction information is detected from the RRC Connection Release message, the UE 50 continuously retrains the UE context at the time of transition of the RRC idle state (the bearer information, the security information, and the like) in the RRC idle state.

### (Another example of processing sequence of entire system)

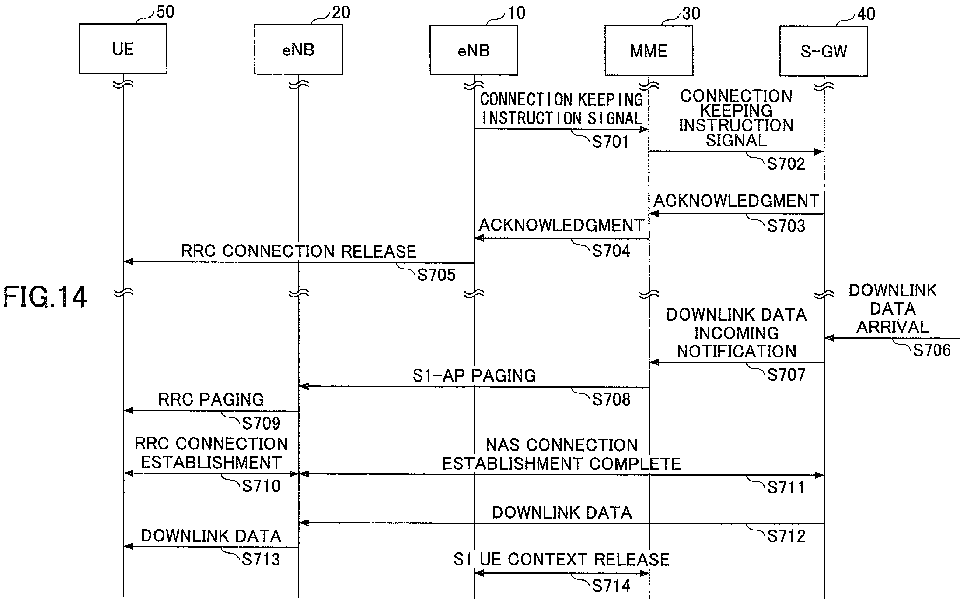

In the examples illustrated in Fig. 11, the UE 10 performs transition between the RRC connected state and the RRC idle state under the same eNB 10, but here, as another example, a process sequence when the UE 50 is connected to the eNB 10 to enter the RRC connected state and enters the RRC idle state in the cell subordinate to the eNB 10, and thereafter, the UE 50 moves to a cell subordinate to the eNB 20 and receives an incoming call will be described with reference to Fig. 14.

Further, the example of Fig. 14 is also under the assumption that the UE 50 is in the RRC connected state in the cell of the eNB 10, and the connection of the Sl-C/U is established.

Similarly to the examples of Fig. 11, the eNB 10 transmits the connection retention instruction signal to the MME 30 (step 701). Further, the MME 30 transmits the connection retention instruction signal to the S-GW 40 (step 702).

As described above, the connection retention instruction signal is a signal for giving an instruction to retain downlink data in the S-GW 40 when there is an incoming call to the UE 50 while maintaining the Sl-C/U connection related to the UE 50 and perform paging from the MME 30.

The S-GW 40 that has received the connection retention instruction signal transmits an acknowledge response to the MME 30 (step 703), and the MME 30 transmits an acknowledge response to the eNB 10 (step 704).

After steps 701 to 704, the eNB 10 transmits the RRC connection release to the UE 50, and causes the UE 50 to transition to the RRC idle state (step 705). After this, the UE 50 moves to the cell subordinate to the eNB 20. The RRC Connection Release message includes an instruction to retention the UE context, and the UE 50 retains the UE context. However, the UE context is information used for the connection with the eNB 10.

Thereafter, the downlink data destined for the UE 50 occurs, and the downlink data arrives at the S-GW 40 (step 706). Here, the Sl-U connection has been established, but the S-GW 40 retains the downlink data in a buffer without transferring the downlink data to the eNB 10 on the basis of the connection retention instruction signal received in step 402.

The S-GW 40 transmits a downlink data arrival notification to the MME 30 (step 707), and the MME 30 transmits an S1-AP paging signal destined for the UE 50 to the eNB 10 (step 708). The paging is similar to an existing paging and transmitted to each eNB (each of one or more eNBs) in a tracking area of the UE 50, but transmission to the eNB 10 is illustrated in Fig. 145.

The eNB 10 that has received the S1-AP paging signal transmits an RRC paging signal to the UE 50 subordinate thereto (step 709).

The UE 50 that has received the RRC paging signal performs an RRC connection establishment procedure and establishes the RRC connection (step 710). Further, the NAS connection procedure is performed between the eNB 20 and the core NW side (the S-GW 40 in Fig. 14), and the Sl-C/U connection for the eNB 20 is established (step 711).

Since the connection between the UE 50 and the S-GW 40 is accordingly established, the S-GW 40 starts transmission of the downlink data to the UE 50 (steps 712 and 713). Further, the UE context between the eNB 10 and the MME 30 is released, and the Sl-C/U connection for the eNB 10 is released (step 714).

In the above example, in the RRC connection establishment procedure of step 710, the UE 50 transmits the message of step 501 of Fig. 12, but since the eNB 20 determines that the UE context corresponding to the UE 50 is not retained, a normal RRC connection procedure is performed. Alternatively, when the eNB 20 determines that the UE context corresponding to the UE 50 is not retained, the eNB 20 may acquire the UE context of the UE 50 from the eNB 10 on the basis of a PCI (a cell ID identifying the eNB 10 of the cell for which the UE 50 retains the UE context) or the like reported from the UE 50 through the message in the RRC connection establishment procedure and perform the RRC connection using the UE context.

### <Specification modifications>

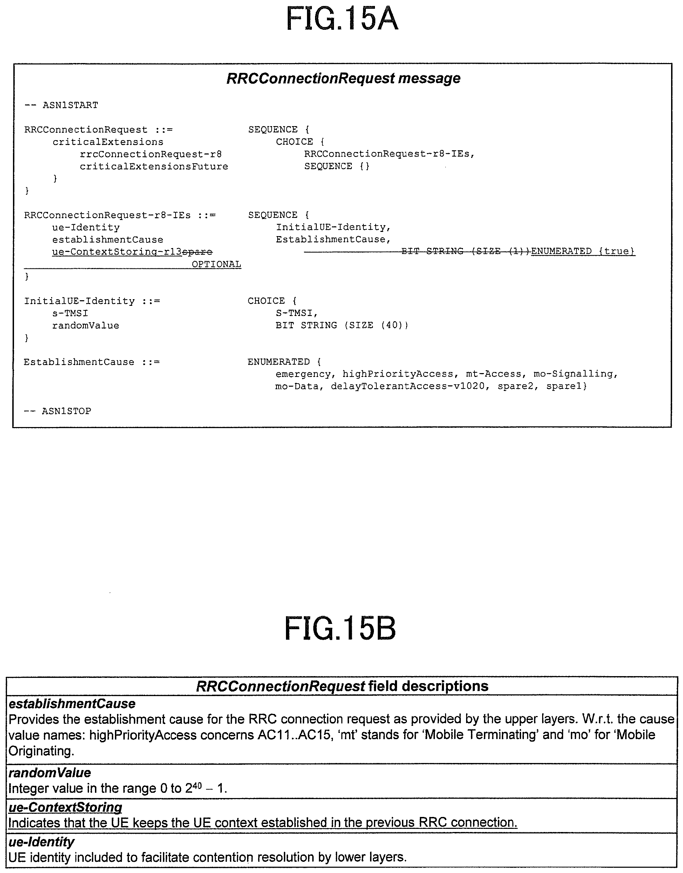

Next, description examples (excerpts) of the 3GPP specification (3GPP TS 36.331 and Non-Patent Document 3) when various kinds of notifications described with reference to Figs. 12 and 13 are given are illustrated in Figs. 15 to 19. In Fig. 15 to Fig. 19, parts changed from Non-Patent Document 3 are underlined.

Fig. 15A illustrates an example of the RRC Connection Request message transmitted from the UE 50 in step 501 of Fig. 12. As illustrated in Fig. 15A, ue-ContextStoring (for example, one bit) is added. As illustrated in Fig. 15B, ue-ContextStoring is information indicating that the UE 50 retains the UE context used in a previous RRC connection. Further, as illustrated in Fig. 15A, the S-TMSI is included.

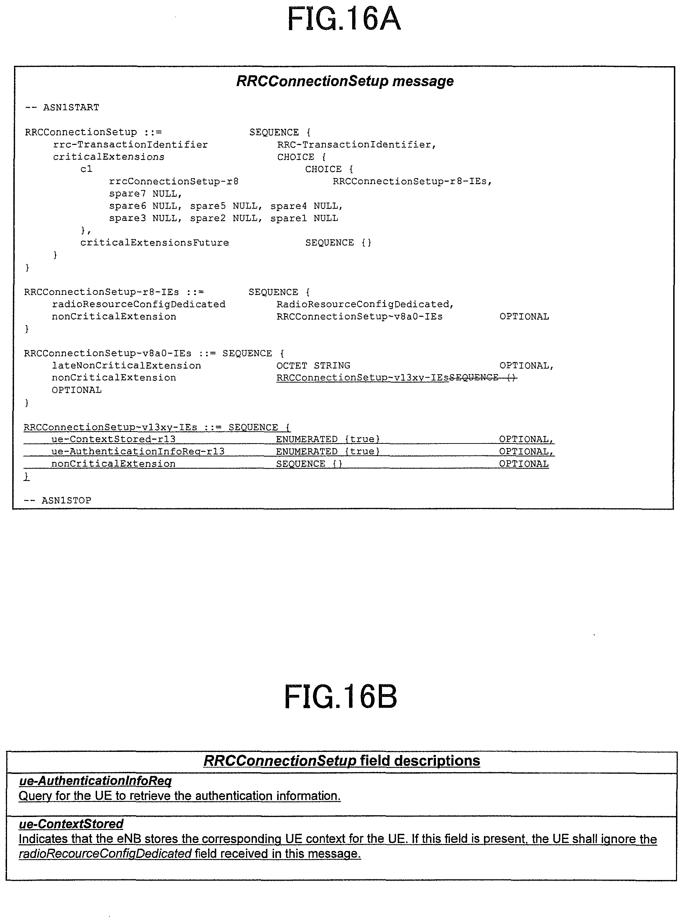

Fig. 16A illustrates an example of the RRC Connection Setup message transmitted from the eNB 10 in step 502 of Fig. 12. As illustrated in Fig. 16A, ue-ContextStored and ue-AuthenticationInfoReq are added.

As illustrated in Fig. 16B, ue-AuthenticationInfoReq is information for requesting the UE to transmit the authentication information. ue-ContextStored is information indicating that the eNB retains the UE context of the UE which is the target of the RRC Connection Setup. When the presence of this information (field) is detected, the UE ignores a radioRecourceConfigDedicated field notified of through the RRC Connection Setup message. As described above, the parameter values which are notified of through this may be applied without ignoring the radioRecourceConfigDedicated field.

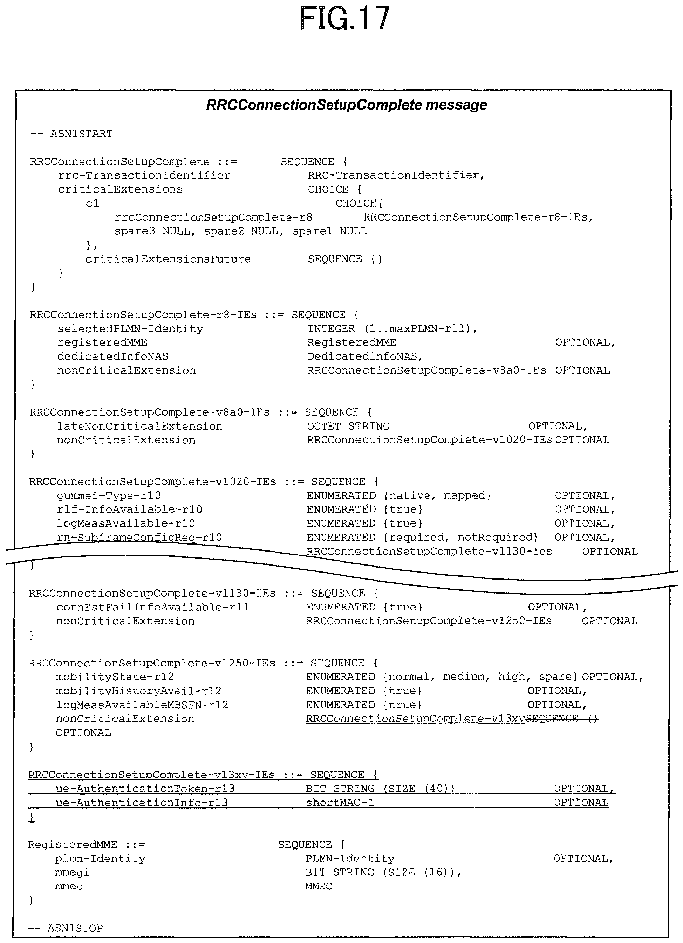

Fig. 17 illustrates an example of the RRC Connection Setup Complete message transmitted from the UE 50 in step 503 of Fig. 12. As illustrated in Fig. 17, ue-AuthenticationToken and ue-AuthenticationInfo which are the authentication information are added.

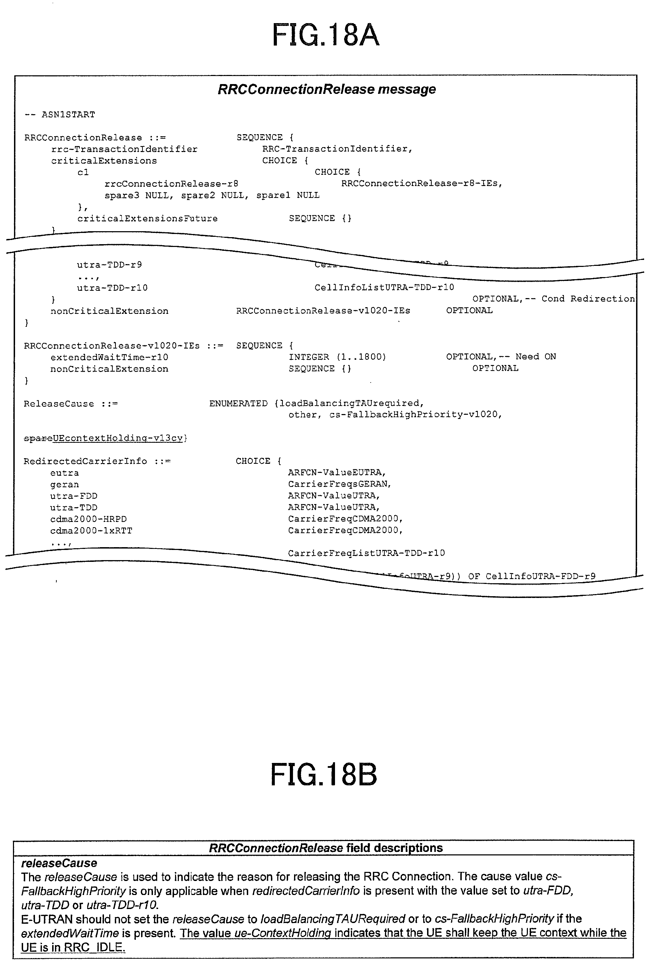

Figs. 18 to 19 illustrate examples 1 and 2 of the RRC Connection Release message transmitted from the eNB 10 in step 601 of Fig. 13.

Figs. 18A and 18B illustrate an example (example 1) of giving a UE context retention instruction using a Cause value. In this case, as illustrated in Fig. 18A, UEcontextHolding is added in ReleaseCause. As illustrated in Fig. 18B, a value of ue-Context Holding indicates an instruction to cause the UE to continuously retain the UE context in the RRC idle state.

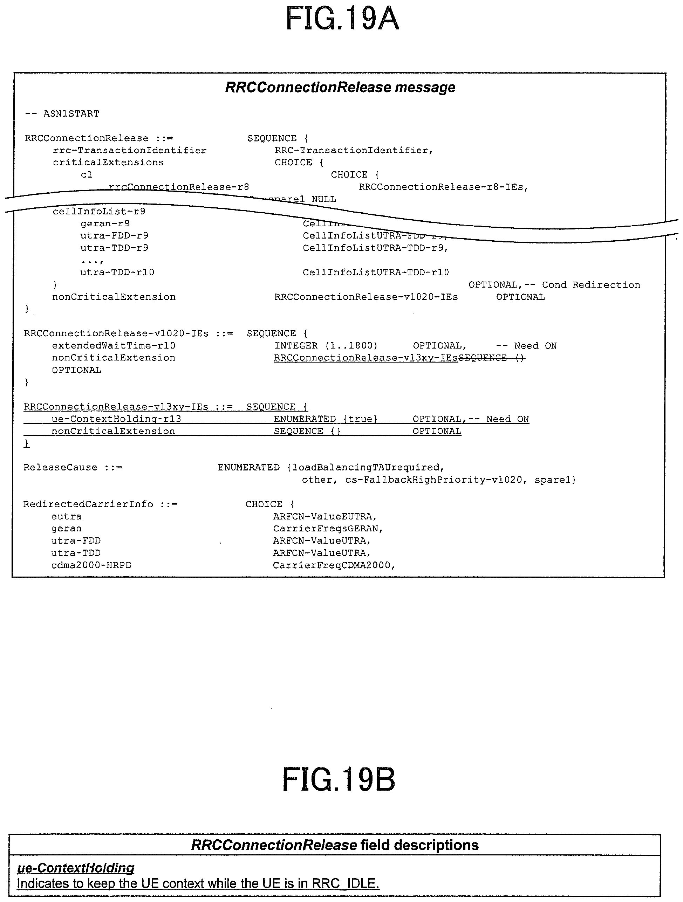

Figs. 19A and 19B illustrate an example (example 2) of giving a UE context retention instruction using a new indication. As illustrated in Fig. 19A, ue-Context Holding is added as the new indication. As illustrated in Fig. 19B, ue-Context Holding indicates an instruction to cause the UE to continuously retain the UE context in the RRC idle state.

### <UE context retention function determination>

As described above with reference to Fig. 12 or the like, in the second embodiment, a notification indicating that the UE 50 retains the UE context is given to the eNB 10. It is under the assumption that the eNB 10 supports UE context retention function (the function of performing the reconnection reusing the retained UE context).

However, as described above in the first embodiment, all eNBs need not necessarily support the UE context retention function. For example, the UE 50 is assumed to enter the RRC idle state while retaining the UE context under the control of the eNB 10 and moves to a cell of an eNB-X which does not have the UE context retention function. Here, even when a notification of the information indicating that the UE 50 retains the UE context is given to the eNB-X, the eNB-X is unable to detect the information. In order to perform a stable operation, when the UE 50 is able to check that the eNB of the serving cell has the UE context retention function, it is desirable that the UE 50 perform the UE context retention notification operation described in Fig. 12 and the like.

An example in which the UE 50 determines whether or not the eNB 10 has the UE context retention function will be described below. Examples 1 to 3 will be described below.

### <Example 2-1>

In an example 2-1, the eNB 10 broadcasts information indicating whether or not the eNB 10 supports the UE context retention function to the UE 50 through broadcast information. As the broadcast information, an SIB 2 is used. The alternative use of an MIB or an SIB1 as broadcast information is not covered by the invention as claimed.

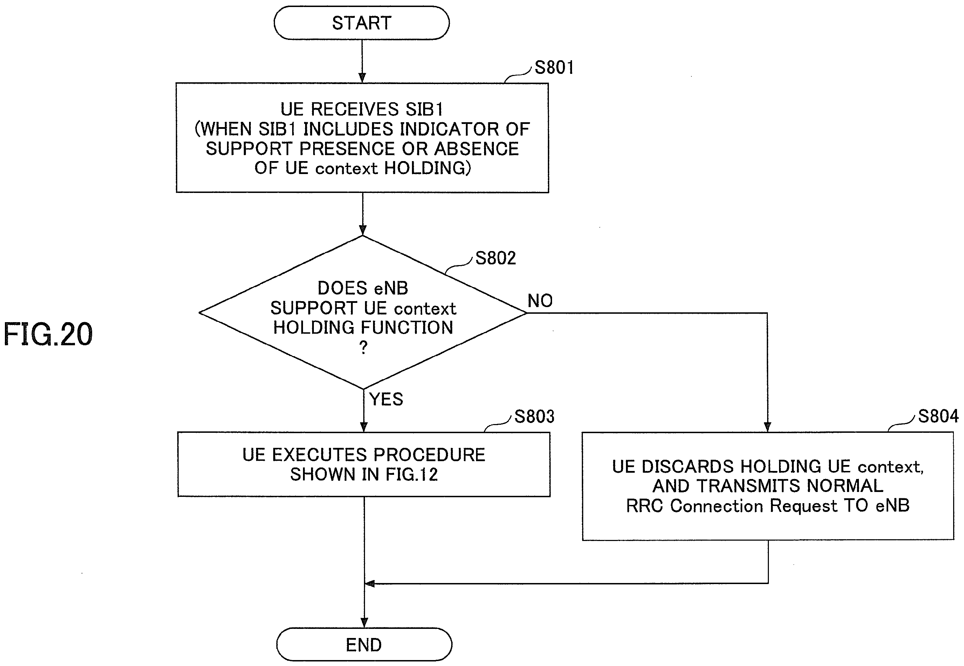

An exemplary operation of the UE 50 related to determination of the UE context retention function will be described with reference to a flowchart of Fig. 20. In the following example, the eNB 10 broadcasts information indicating whether or not the eNB 10 supports the UE context retention function using the SIB1.

In step 801, UE 50 receives the SIB1 from the eNB 10. In step 802, the UE 50 reads the information indicating whether or not the eNB 10 supports the UE context retention function from the SIB1, and the UE 50 determines whether or not the eNB 10 supports the UE context retention function on the basis of the information.

When the determination result of step 802 is Yes (supporting), the process proceeds to step S803, and when the UE 50 performs transition to the RRC connected state, the procedure described with reference to Fig. 12 and the like is performed. In other words, the UE 50 gives a notification of the information indicating that the UE context is retained.

When the determination result of step 802 is No (not supporting), the process proceeds to step S804, and when the UE 50 performs transition to the RRC connected state, the UE 50 drops the retained UE context and transmits the normal RRC Connection Request which does not use a spare bit or the like to the eNB 10.

### <Example 2>

In an example 2-2, the eNB 10 gives a notification indicating whether or not the eNB 10 supports the UE context retention function to the UE 50 through the Random Access Response in the random access procedure.

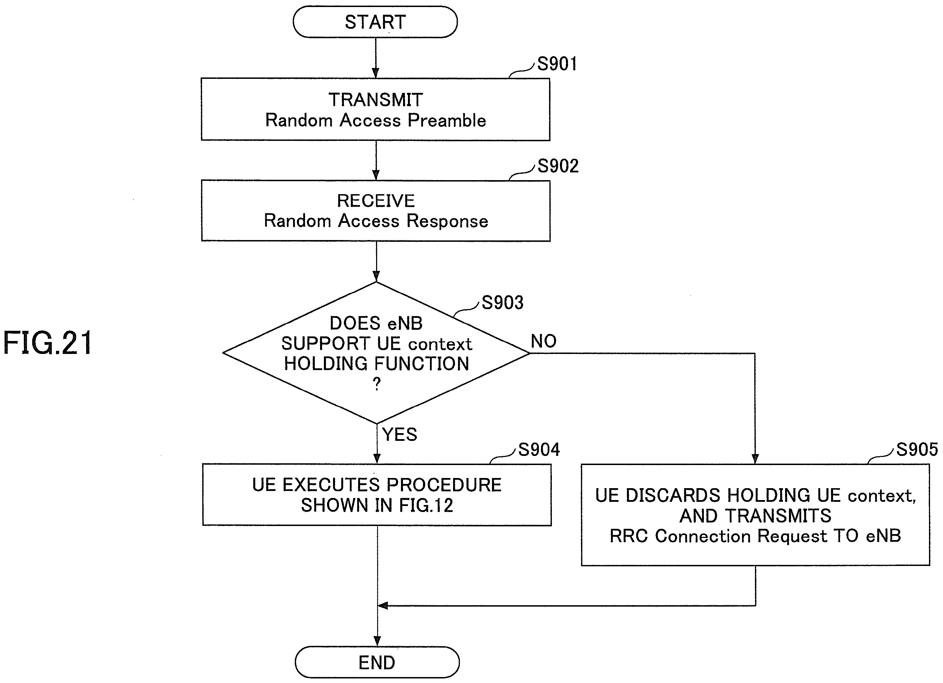

An exemplary operation of UE 50 in the example 2-2 will be described with reference to a flowchart of Fig. 21. Here, for example, a situation in which the UE 50 in the RRC idle state transitions to the RRC connected state upon receiving paging (or in order to originate a call) is illustrated.

In step 901, the UE 50 transmits a Random Access Preamble to the eNB 10. In step 902, the UE 50 receives a Random Access Response from the eNB 10. The Random Access Response includes information indicating whether or not the eNB 10 supports the UE context retention function.

In step 903, the UE 50 reads the information indicating whether or not the eNB 10 supports the UE context retention function from the Random Access Response, and the UE 50 determines whether or not the eNB 10 supports the UE context retention function on the basis of the information.

When the determination result of step 903 is Yes (supporting), the process proceeds to step S904, and the UE 50 performs the procedure described in Fig. 12 and the like. In other words, the UE 50 gives a notification of information indicating that the UE context is retained or the like.

When the determination result of step 903 is No (not supporting), the process proceeds to step S905, and the UE 50 drops the retained UE context and transmits the normal RRC Connection Request that does not use a spare bit to the eNB 10.

The message example of the Random Access Response in the example 2-2 is similar to that of the example 1-2 which is illustrated in Figs. 9 and 10.

### <Example 2-3>

In the example 2-3, the UE 50 determines whether or not the UE context retention function is supported in the eNB 10 in accordance with whether or not ue-ContextStored (the information indicating that the eNB 10 retains the UE context corresponding to the UE 50) is included in the RRC Connection Setup message.

In other words, in the example 2-3, the UE 50 constantly gives the notification indicating that the UE context is retained to the eNB through the RRC Connection Request, and performs the operation illustrated in Fig. 12. However, here, it is determined whether or not the UE context retention function is supported in the eNB 10 on the basis of the RRC Connection Setup message.

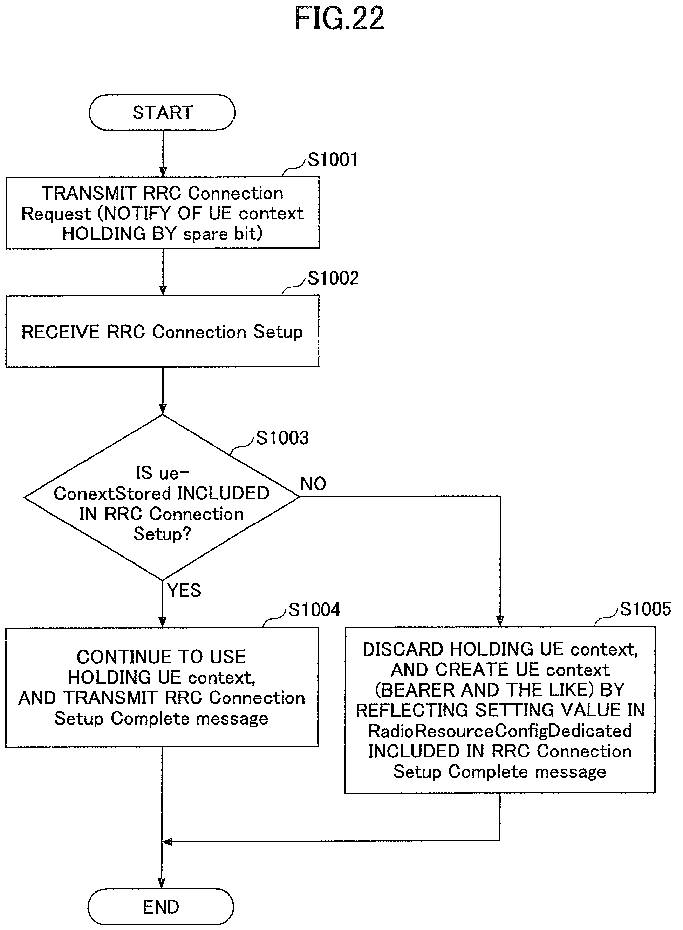

An exemplary operation of UE 50 in the example 2-3 will be described with reference to a flowchart of Fig. 22. For example, when the UE 50 in the RRC idle state desires to transition to the RRC connected state, in step 1001, the UE 50 transmits the RRC Connection Request message including the information indicating that the UE context is retained to the eNB 10.

In step 1002, the UE 50 receives the RRC Connection Setup message from the eNB 10. In step 1003, the UE 50 determines whether ue-ContextStored is included in the RRC Connection Setup message, and when the determination result is Yes (included), the UE 50 proceeds to step 1004, whereas when the determination result is No (not included), the process proceeds to step 1005.

In step 1004, the UE 50 continues to use the retained UE context, and transmits the RRC Connection Setup Complete message similar to step 503 in Fig. 12 to the eNB 10.

In step 1005, the UE 50 drops the retained UE context, creates a UE context (the bearer, the MAC config, the PHY config, and the like) by reflecting a set value in the RadioResourceConfigDedicated included in the RRC Connection Setup message, and uses the UE context for the connection (communication) with the eNB 50. After step 1005, the normal RRC connection procedure is performed.

### (Modification)

Next, a modification which can be applied to both the first embodiment and the second embodiment will be described.

As described above, in the present embodiment, the notification indicating whether or not the eNB 10 supports the UE context retention function to the UE 50 is given using a SIB2 signal Z . The alternative use of a SIB1 signal is not covered by the invention as claimed.

Meanwhile, a scheme in which data is transmitted and received through a signaling radio bearer (SRB) in the C-plane under the assumption of the application to Internet of things (IoT) or the like in which a small amount of data is transmitted and received, and thus the signaling amount is reduced has been proposed (corresponding to Solution 2 of Non-Patent Document 3: Infrequent small data transmission using pre-established NAS security). Here, this scheme is referred to as an "SRB scheme," "cp CIoTEPSOptimisation," "Control plane CIoT EPS Optimisation," or a "C-plane solution."

On the other hand, a scheme in which the signaling amount is reduced by retaining the UE context while performing transmission and reception of data in the U-plane (DRB) and reusing the UE context as in the methods described in the first embodiment and the second embodiment or the method proposed as "Solution 18: User plane based solution with AS information stored in RAN" in Non-Patent Document 3 has been proposed. This scheme is a solution in the U-plane. Here, this scheme is referred to as a "DRB scheme," a "U-plane solution," a "User plane CIoT EPS Optimisation," or "upCIoTEPSOptimisation."

In the present modification, a notification indicating whether or the eNB 10 supports the "C-plane solution" or the "U-plane solution" is given to the UE 50. A signal used for the notification is not limited to a specific signal, but in the present modification, the SIB 2 is used.

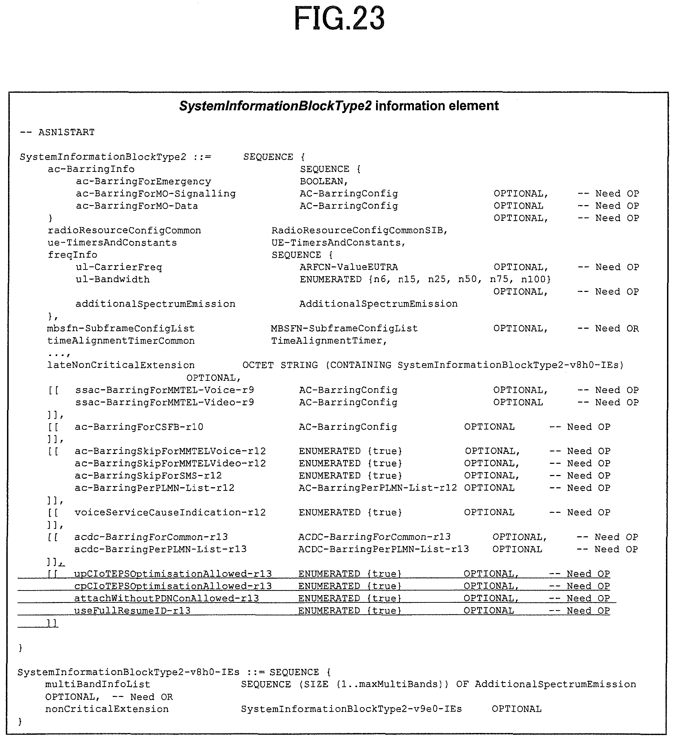

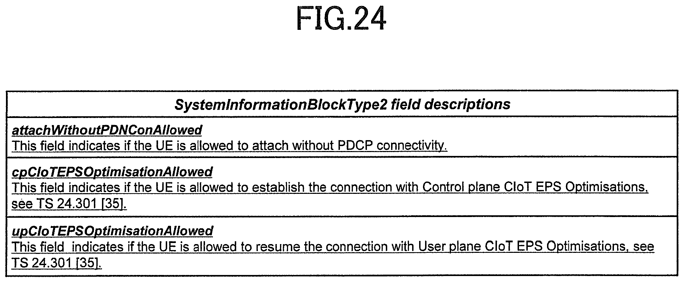

Figs. 23 and 24 illustrate a specification modification (excerpt) of the SIB 2 according to the present modification. Figs. 23 and 24 illustrate changes from Non-Patent Document 4, and changed parts are underlined. As illustrated in Fig. 23, "cpCIoTEPSOptimisationAllowed" and "upCIoTEPSOptimisationAllowed" are added. As illustrated in Fig. 24, "cpCIoTEPSOptimisationAllowed" indicates whether or not the UE can perform a connection with "Control planeCooTEPSOptimisation."

In other words, it indicates whether or not the network (eNB) supports "Control planeCooTEPSOptimisations."

"UpCIoTEPSOptimisationAllowed" indicates whether or not the UE can perform a connection with "UserplaneCIoTEPSOptimisation."

In other words, it indicates whether or not the network (eNB) supports "User plane CIoT EPS Optimisation."

In the present modification, the UE 50 is assumed to support both functions of "Control plane CIoT EPS Optimisation" and "User Plane CIoT EPS Optimisation."

### <Exemplary operation 1>

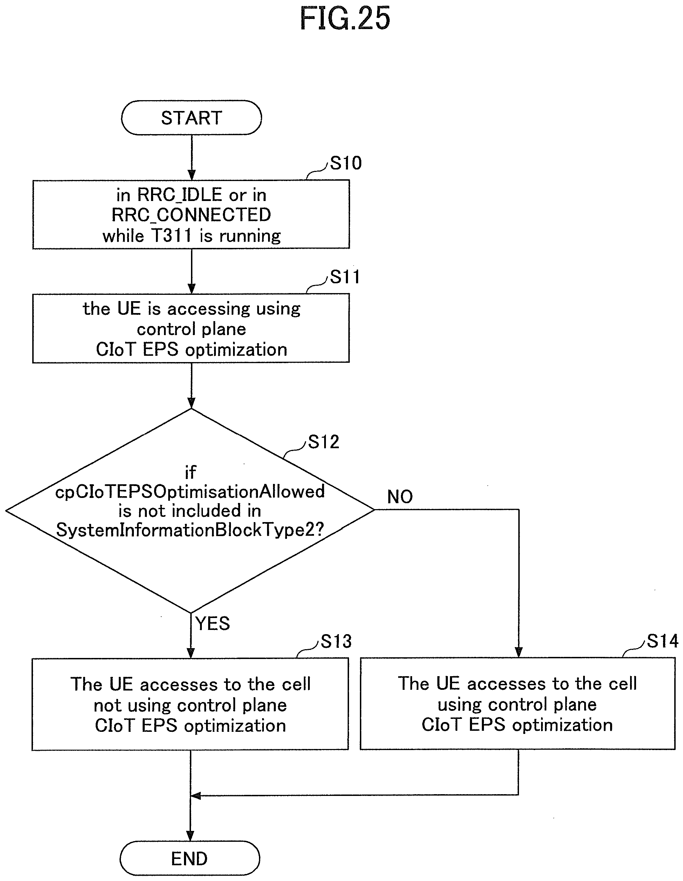

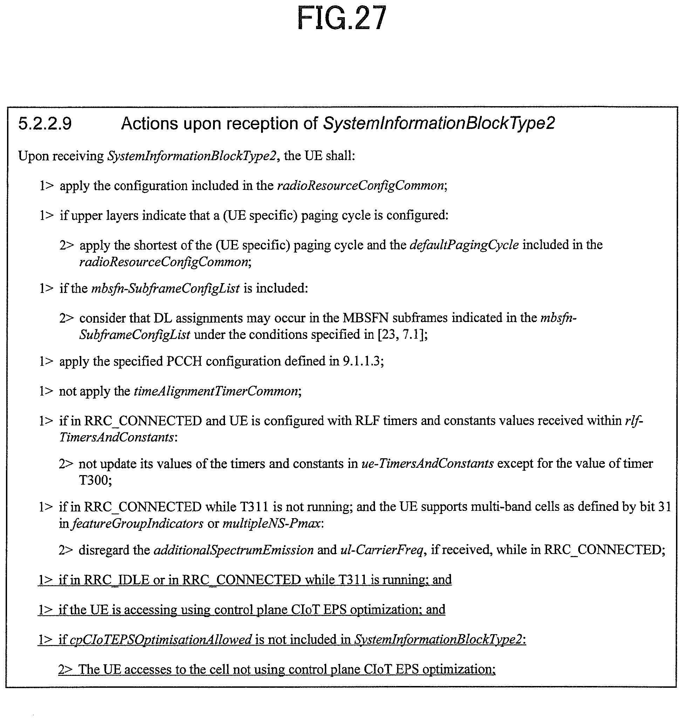

An exemplary operation 1 of the UE 50 when the UE 50 receives the SIB 2 from the eNB 10 in a modification will be described with reference to a flowchart of Fig. 25, and respective steps of the flow of Fig. 25 will be described in a specification modification which will be described later with reference to Fig. 27. Fig. 25 illustrates an operation at the time of cell selection of the UE 50. However, the present invention is not limited to the operation at the time of cell selection.

In step S10, the UE 50 is in the RRC_IDLE state or the RRC_CONNECTED stat and in a state in which a timer T311 is activated (for example, a state in which a cell selection process is being performed due to a link failure). In step S11, the UE 50 performs access in accordance with the scheme of "control plane CIoT EPS optimization."

In step S12, the UE 50 determines whether or not "cpCIoTEPSOptimisation ALLOWED" is included in the SIB 2. In other words, the UE 50 determines whether or not the eNB 10 supports the scheme of "control plane CIoT EPS optimization."

When a determination result of step S12 is Yes, the process proceeds to step S13, and the UE 50 accesses the cell (eNB 10) without using the scheme of "control plane CIoT EPS optimization."

For example, the UE 50 performs access in accordance with "User plane CIoT EPS Optimisation" or a scheme of a related art (for example, a scheme including NAS connections such as S710 and S711 in Fig. 14). For example, when "User plane CIoT EPS Optimisation" is used, the UE 50 performs the processes illustrated in Figs. 7 and 8, or the processes illustrated in Figs. 20 to 22.

When the determination result of step S12 is No, the process proceeds to step S14, and the UE 50 accesses the cell (eNB 10) using the scheme of "control plane CIoT EPS optimization."

In this example, the mobile communication system according to the present embodiment is assumed to support "Solution 2: Infrequent small data transmission using pre-established NAS security" of Non-Patent Document 3, and the UE 50 performs an access procedure conforming to Solution 2.

### <Exemplary operation 2>

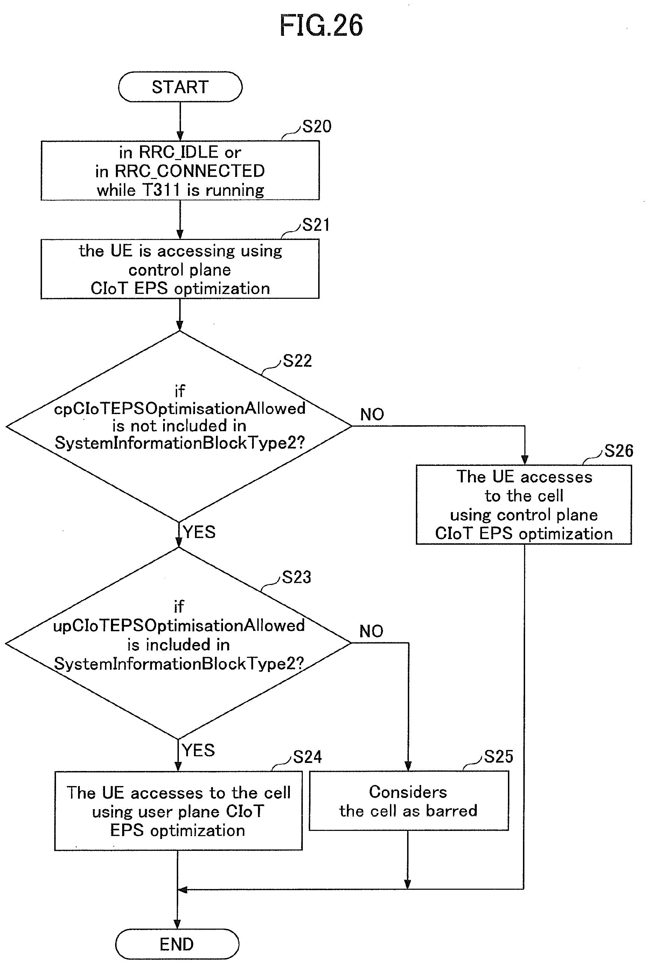

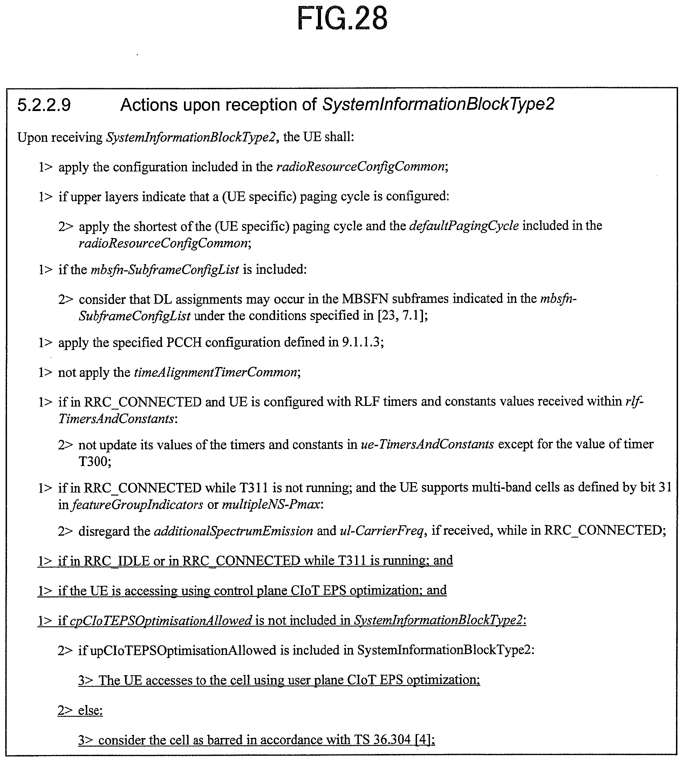

Next, an exemplary operation 2 of the UE 50 when the UE 50 receives the SIB 2 from the eNB 10 in a modification will be described with reference to a flowchart of Fig. 26, and respective steps of the flow of Fig. 26 will be described in a specification modification which will be described later with reference to Fig. 28. Fig. 26 illustrates an operation at the time of cell selection of the UE 50. However, the present invention is not limited to the operation at the time of cell selection.

Steps S20 and S21 are the same as steps S10 and S11 of the exemplary operation 1.

In step S22, the UE 50 determines whether or not "cpCIoTEPSOptimisationAllowed" is included in the SIB2. In other words, the UE 50 determines whether or not the eNB 10 supports the scheme of "control plane CIoT EPS optimization."

When the determination result of step S22 is Yes, the process proceeds to step S23, and the UE 50 determines whether or not "upCIoTEPSOptimisationALLowed" is included in the SIB2. In other words, the UE 50 determines whether or not the eNB 10 supports the scheme of "User plane CIoT EPS optimization."

When the determination result of step S23 is Yes, the process proceeds to step S24, and the UE 50 accesses the cell in accordance with the scheme of "User plane CIoT EPS Optimisation."

For example, when "User plane CIoT EPS Optimisation" is used, the UE 50 performs the processes illustrated in Figs. 7 and 8, or the processes illustrated in Figs. 20 to 22. In the example operation 2 in which it is checked whether or not "upCIoTEPSOptimisationALLowed" is included, "upCIoTEPSOptimisationALLowed" is regarded as "instruction information indicating whether or not the base station has the context retention function" or not, and in step S24, S203, S304 in Fig. 8, the procedure illustrated in Fig. 12, or the like may be performed here.

When the determination result of step S23 is No, the process proceeds to step S25, and the UE 50 determines that access to the cell is prohibited (barred), for example, makes an attempt to access another cell. In the example operation 2, when the network does not support "C-plane solution" or "U-plane solution," the UE 50 is assumed not to be able to access the network. In other words, the UE 50 is assumed not to support NAS of a related art and support only NAS dedicated to the C/U-plane solution. Therefore, if the UE 50 supports the NAS scheme of the related art, access may be made in accordance with the NAS scheme of the related art in step S25.

When the determination result of step S22 is No, the process proceeds to step S26, and the UE 50 accesses the cell (eNB 10) using the scheme of "control planeCooteEPSoptimization," similarly to step S14 in the example operation 1.

### <Specification modification>

Fig. 27 illustrates a specification modification (excerpt) corresponding to the flow of Fig. 25. Fig. 27 illustrates changes from Non-Patent Document 4, and changed parts are underlined. As illustrated in Fig. 27, the content of the flow illustrated in Fig. 25 is added.

Fig. 28 illustrates a specification modification (excerpt) corresponding to the flow in Fig. 26. Fig. 28 illustrates changes from Non-Patent Document 4, and changed parts are underlined. As illustrated in Fig. 28, content of the flow illustrated in Fig. 26 is added.

As described above, by using the modification scheme, the UE 50 can flexibly select the scheme and perform access in accordance with a scheme supported by the network side.

### <Other examples in modification>

In the present modification, the eNB gives a notification indicating whether the network supports "C-plane solution" and whether or not the network supports "U-plane solution" to the UE 50 through broadcast system information such as the SIB 2. The UE 50 that has received the notification transfers information (bits) of the notification to a higher layer (for example, the NAS layer). The UE 50 can perform an operation to be described below including the operation in the NAS layer on the basis of the information of the notification.

When the UE 50 that supports "U-plane solution" is in the idle state (or the suspended state) while retaining the context through the process illustrated in Fig. 5, Fig. 11, or Fig. 13, the UE 50 is assumed to start the procedure using an initial NAS message in a certain cell.

Examples of the initial NAS message include an ATTACH REQUEST, a DETACH REQUEST, a TRACKING AREA UPDATE REQUEST, a SERVICE REQUEST, an EXTENDED SERVICE REQUEST, and a CONTROL PLANE SERVICE REQUEST (Non-Patent Document 6).

When the UE 50 is an NB-S1 mode, that is, when the UE 50 is a UE for NB-IoT, the UE 50 requests the higher layer (for example, the RRC layer) to resume the RRC connection when the procedure of the NAS layer starts.

When UE 50 is a WB-S1 mode, that is, when the UE 50 is a non-NB-lOT UE, UE 50 performs the following operation. The WB-S1 mode is a mode when a non-NB-lOT UE (a UE which is not for NB-10T) uses CIoT EPS optimization.

When the procedure of the NAS layer starts, the UE 50 first determines whether or not a notification indicating that the network supports "U-plane solution" has been received from the eNB through the broadcast system information. When the UE 50 has received the notification, the UE 50 requests the lower layer to resume the RRC connection. Then, for example, the UE 50 regards the notification as the "instruction information indicating whether or the base station has the context retention function," and performs S203 of Fig. 7, S304 of Fig. 8, or the procedure illustrated in Fig. 12.

When the UE 50 has not received the notification indicating that the UE 50 supports "U-plane solution" from the eNB through the broadcast system information, the UE 50 transmits the initial NAS message including the SERVICE REQUEST ad requests the lower layer to resume the RRC connection. In this case, in the lower layer that has received the request, the UE 50 drops, for example, the context and the Resume ID and transmits the RRC Connection Request.

Further, irrespective of whether the UE 50 is the NB-S1 mode or the WB-S1 mode, the UE 50 may perform the operation of the WBS 1 mode described above.

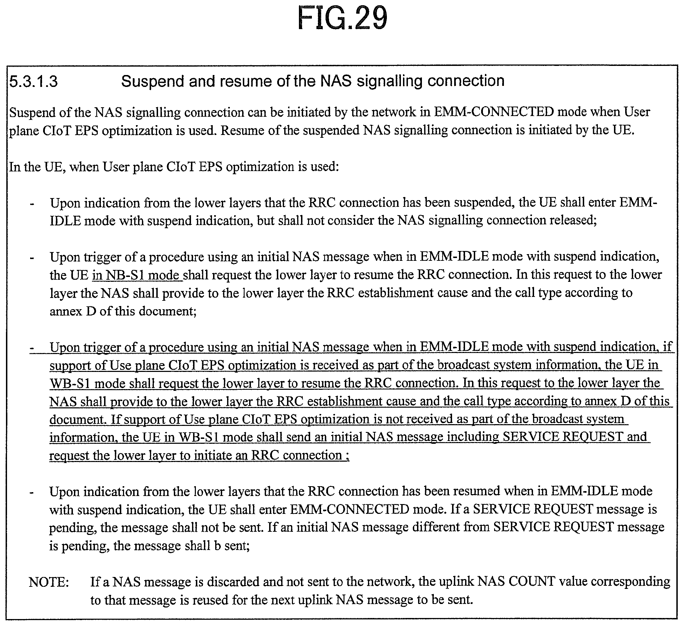

A specification modification corresponding to the above operation is illustrated in Fig. 29. In Fig. 29, for the excerpt from Non-Patent Document 6, changed parts corresponding to the above operation are underlined. In the specifications illustrated in Fig. 29, "Upon trigger of a procedure using an initial NAS message when in EMM-IDLE mode with suspend indication, the UE in NB-S1 mode shall request the lower layer to resume the RRC connection. In this request to the lower layer the NAS shall provide to the lower layer the RRC establishment cause and the call type according to annex D of this document;" and "Upon trigger of a procedure using an initial NAS message when in EMM-IDLE mode with suspend indication, if support of Use plane CIoT EPS optimization is received as part of the broadcast system information, the UE in WB-S1 mode shall request the lower layer to resume the RRC connection In this request to the lower layer the NAS shall provide to the lower layer the RRC establishment cause and the call type according to annex D of this document. If support of Use plane CIoT EPS optimization is not received as part of the broadcast system information, the UE in WB-S1 mode shall send an initial NAS message including SERVICE REQUEST and request the lower layer to initiate an RRC connection;" correspond to the above operation. Further, "in EMM-IDLE mode with suspend indication" indicates that the UE 50 is in the idle state while retaining the context.

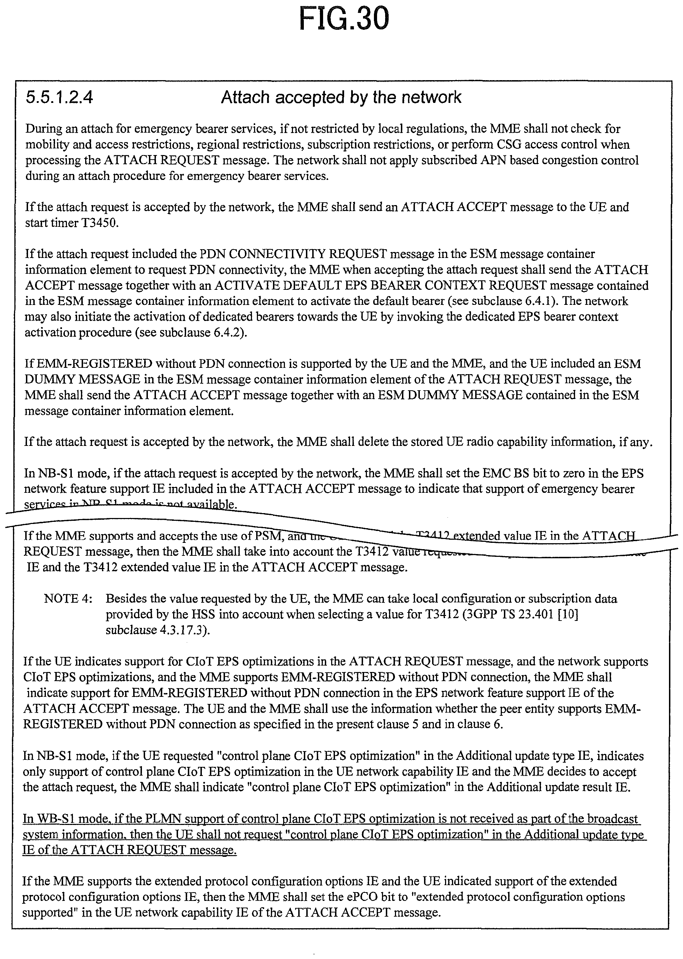

In this example, when the information indicating that the network supports the "C-plane solution" is not received from the eNB through the broadcast system information, the UE 50 of the WB-S1 mode does not request the eNB side to use "C-plane solution" through the ATTACH REQUEST. A specification modification corresponding to this operation is illustrated in Fig. 30. In Fig. 30, for the excerpt from Non-Patent Document 6, changed parts corresponding to the above operation are underlined. In the specification illustrated in Fig. 30, "In WB-S1 mode, if the PLMN support of control plane CIoT EPS optimization is not received as part of the broadcast system information, then the UE shall not request " control plane CIoT EPS optimization " in the Additional update type IE of the ATTACH REQUEST message." corresponds to the above operation.

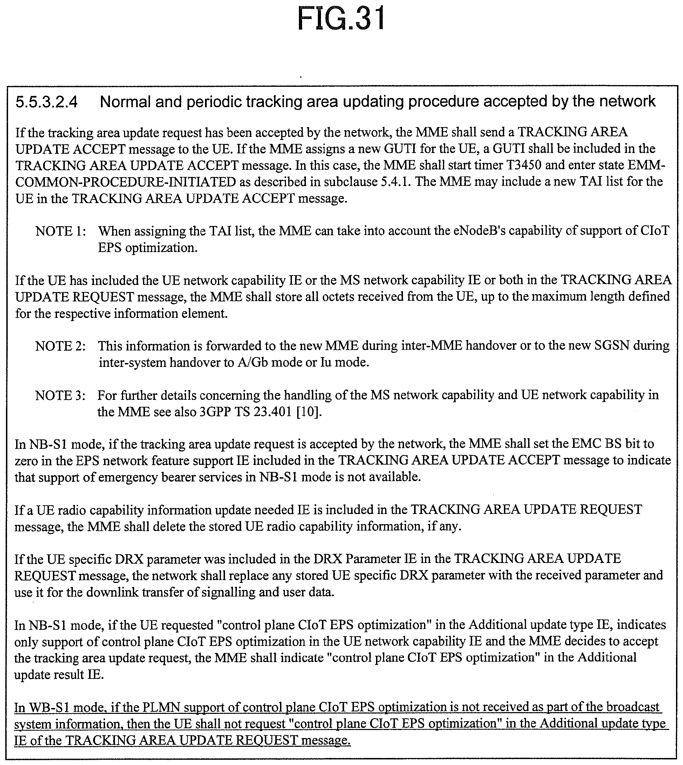

In this example, when the information indicating that the network supports the "C-plane solution" is not received from the eNB through the broadcast system information, the UE 50 of the WB-S1 mode does not request the eNB side to use the "C-plane solution" through the TRACKING AREA UPDATE REQUEST. A specification modification corresponding to this operation is illustrated in Fig. 31. In Fig. 31, for the excerpt from Non-Patent Document 6, changed parts corresponding to the above operations are underlined. In the specification illustrated in Fig. 31, "In WB-S1 mode, if the PLMN support of control plane CIoT EPS optimization is not received as part of the broadcast system information, then the UE shall not request" control plane CIoT EPS optimization" in the Additional update type IE of the TRACKING AREA UPDATE REQUEST message." corresponds to the above operation.

Further, in the case in which the UE 50 is a non-NB-IoT UE, the UE 50 moves to a cell in which the "C-plane solution" is used, and the SERVICE REQUEST is activated in the cell, the UE 50 perform the following operation.

When the information indicating that the network supports the "C-plane solution" is received from the eNB through the broadcast system information, the UE 50 transmits a dedicated CONTROL PLANE SERVICE REQUEST and enters a state of EMM-SERVICE-REQUEST-INITIATED. Further, when the information indicating that the network supports the "C-plane solution" is not received from the eNB through the broadcast system information, the UE 50 transmits the SERVICE REQUEST or the EXTEND SERVICE REQUEST ad enters the state of EMM-SERVICE-REQUEST-INITIATED.

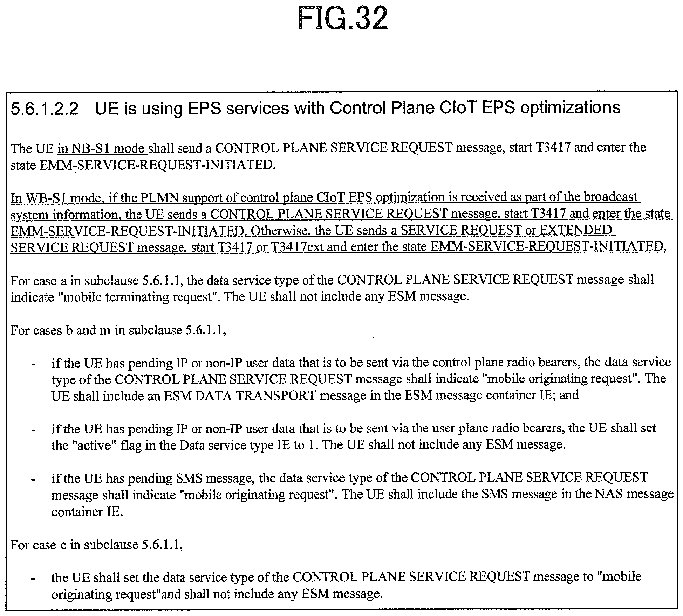

A specification modification corresponding to the above operation is illustrated in Fig. 32

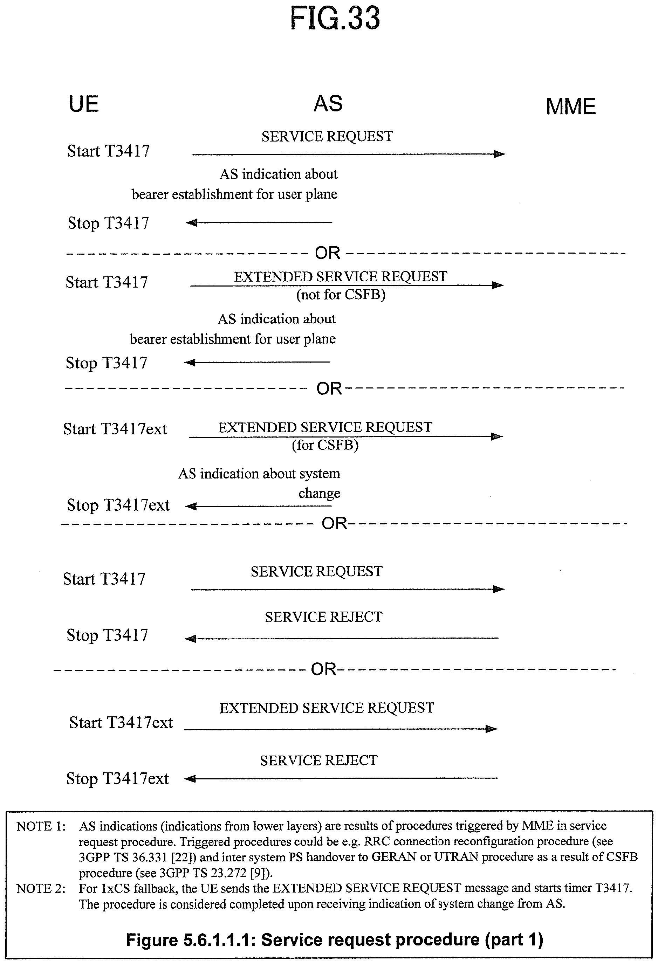

In Fig. 32, for the excerpt from Non-Patent Document 6, changed parts corresponding to the above operation are underlined. In the specification illustrated in Fig. 32, "In WB-S1 mode, if the PLMN support of control plane CIoT EPS optimization is received as part of the broadcast system information, the UE sends a CONTROL PLANE SERVICE REQUEST message, start T3417 and enter the state EMM-SERVICE-REQUEST-INITIATED. Otherwise, the UE sends a SERVICE REQUEST or EXTENDED SERVICE REQUEST message, start T3417 or T3417ext and enter the state EMM-SERVICE-REQUEST-INITIATED." corresponds to the above operation. When the information indicating that the network supports the "C-plane solution" is not received from the eNB through the broadcast system information, the UE 50 performs any one of a plurality of procedures illustrated in Fig. 33.

### (Exemplary device configuration)

Next, an exemplary configuration of each of the devices according to an embodiment of the present invention will be described. In a configuration of each of the respective devices to be described below, only functional units particularly related to the embodiment of the invention are illustrated, and functions (not illustrated) for operating as a device in a communication system conforming to at least LTE (LTE of a meaning including an EPC) are also provided. Further, functional configurations illustrated in the respective drawing are merely examples. Any classification or any name may be used as a function classification or a name of a functional unit as long as the operation according to the preset embodiment can be performed.

Each device may have the function of both of the first embodiment and the second embodiment may have any one of the first embodiment and the second embodiment. Further, each device may have all the functions of the first embodiment, the second embodiment, and the modifications or may have any one of the "first embodiment and the modification" and the "second embodiment and the modification." In the following description, each device is assumed to have at least the functions of both of the first embodiment and the second embodiment.

### <Exemplary configurations of MME and S-GW>

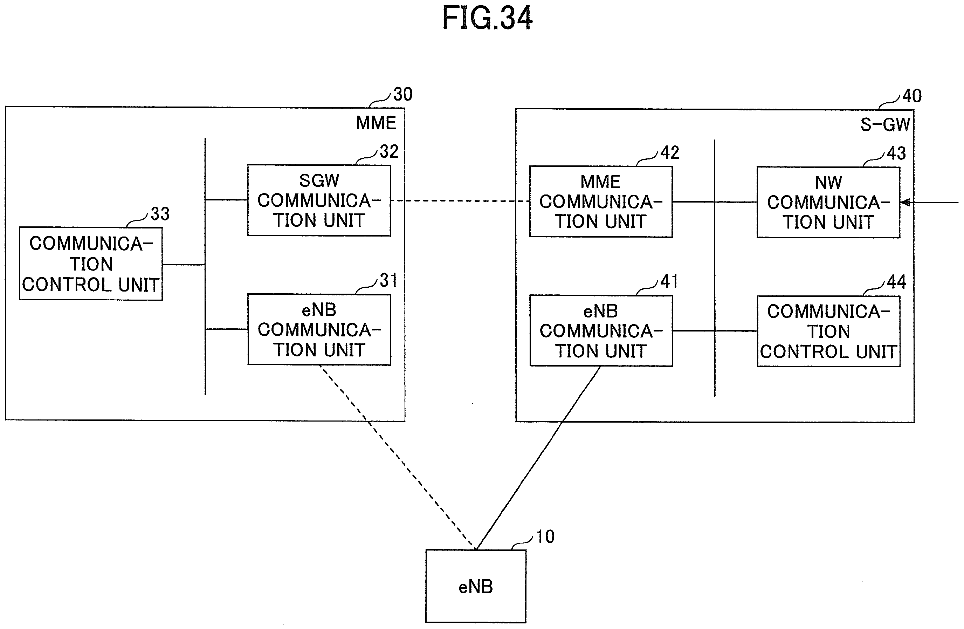

First, exemplary configurations of the MME 30 and the S-GW 40 will be described with reference to Fig. 34. As illustrated in Fig. 34, the MME 30 includes an eNB communication unit 31, an SGW communication unit 32, and a communication control unit 33.

The eNB communication unit 31 has a function of transmitting or receiving control signals to or from the eNB through an S1 MME interface. The SGW communication unit 32 includes a function of transmitting or receiving a control signals to or from the S-GW through an S11 interface.

The S-GW 40 includes an eNB communication unit 41, an MME communication unit 42, an NW communication unit 43, and a communication control unit 44. The eNB communication unit 41 has a function of transmitting or receiving control signals to or from the eNB through an Sl-U interface. The MME communication unit 42 41 a function of transmitting or receiving control signals to or from the MME through an S11 interface. The NW communication unit 43 has a function for performing transmission and reception of control signals and transmission and reception of data with a node device on a core NW side.

The above description is common to the first embodiment and the second embodiment. Particularly, the function of the second embodiment (the scheme different from that of Non-Patent Document 3) will be described below.

When the connection retention instruction signal is received from the eNB, the communication control unit 33 instructs the SGW communication unit 32 to transmit the connection retention instruction signal to the S-GW, and when the acknowledge response is received from the S-GW, the communication control unit 33 instructs the SGW communication unit 32 to transmit the acknowledge response to the eNB.

The communication control unit 44 has a function of instructing the MME communication unit 42 to transmit an acknowledge response to the MME when the connection retention instruction signal is received from the MME. Further, in the case in which the connection retention instruction signal is received from the MME, the communication control unit 44 has a function of instructing the NW communication unit 43 to retain the downlink data in the buffer when downlink data to the corresponding UE is received and instructing the NW communication unit 43 to transmit the downlink data to transmit the downlink data when the RRC connection establishment complete is received from the eNB.

The MME 30 and the S-GW 40 can be configured as a single device. In this case, communication of the S11 interface communication between the SGW communication unit 32 and the MME communication unit 42 is communication inside the device.

Next, exemplary configurations of the UE 50 and the eNB 10 according to the embodiment of the present invention (including the first embodiment, the second embodiment, and the modification) will be described.

### <User equipment UE>

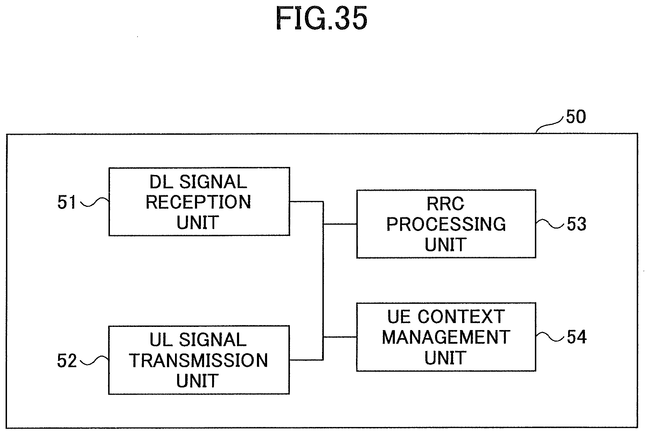

Fig. 35 illustrates a functional configuration diagram of the user equipment (UE 50). As illustrated in Fig. 35, the UE 50 includes a DL signal receiving unit 51, an UL signal transmitting unit 52, an RRC processing unit 53, and a UE context management unit 54. Fig. 46 illustrates only functional units of the UE 50 particularly related to the present invention, and the UE 50 also has functions (not illustrated) of performing at least operations conforming to LTE.

The DL signal receiving unit 51 has a function of receiving various kinds of downlink signals from the base station eNB and acquiring information of a higher layer from received signals of the physical layer, and the UL signal transmitting unit 52 has a function of generating various kinds of signals of the physical layer from information of the higher layer to be transmitted from the UE 50 and transmitting the generated signals to the base station eNB.

The RRC processing unit 53 performs the UE side determination process, the generation, the transmission, and the reception of the RRC message (the transmission is transmission via the UL signal transmitting unit 52), interpretation of the broadcast information and the RRC message received by the DL signal receiving unit 51, the generation, the transmission, and the reception of the NAS message (the transmission is transmission via the UL signal transmitting unit 52, and the reception is reception via the DL signal receiving unit 51), the request from the NAS layer to the lower layer, the notification of the U/C plane support information to the higher layer, and the like which have been described above with reference to Figs. 7 to 10, 12, 13, 15 to 22, 25, 26, and 29 to 33. Further, the transmission and reception of the MAC signal in the random access procedure described with reference to Figs. 8 to 10 and Fig. 21 may be performed by the DL signal receiving unit 51 and the UL signal transmitting unit 52. Further, the RRC processing unit 53 has a function of resuming the RRC connection using the UE context retained in the UE context management unit 54. Further, the RRC processing unit 53 has a function of dropping the retained UE context and starting the RRC connection through the RRC connection request when the RRC connection is not resumed (for example, the eNB does not support the retention function or when the information indicating that the U-plane solution is supported is not received from the eNB). Further, the RRC processing unit 53 has a function of resuming the RRC connection using the UE context retained in the UE context management unit 54. In the present embodiment, since the RRC processing unit 53 also performs the process of the NAS layer, the RRC processing unit 53 may be referred to as an "RRC/NAS processing unit 53."

The UE context management unit 54 includes a storage unit such as a memory and retains, for example, the UE context and the UE identifier (S-TMSI or the like) in the RRC retention state/RRC idle state on the basis of the instruction described in step 107 of Fig. 5, Fig. 13, and the like. In the procedure illustrated in Fig. 12, the UE context management unit 54 determines whether or not the UE context is retained, and instructs the RRC processing unit 53 to give the notification of the information indicating that the UE context is retained when the UE context is retained.

The entire configuration of the UE 50 illustrated in Fig. 35 may be implemented by a hardware circuit (for example, one or more IC chips), or a part of the configuration of the UE 50 may be implemented by a hardware circuit, and the remaining parts may be implemented by a CPU and a program.

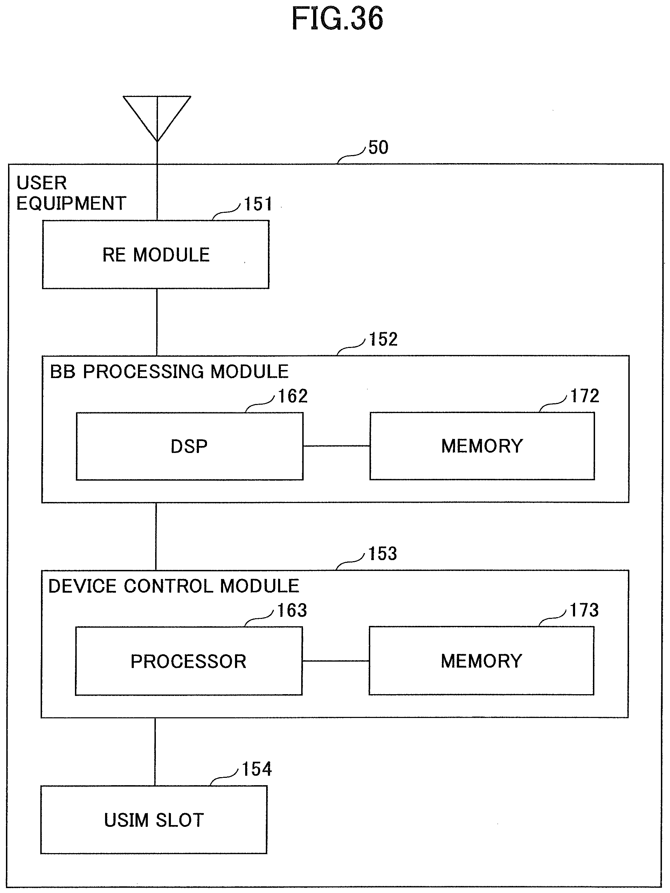

Fig. 36 is a diagram illustrating an example of a hardware (HW) configuration of the UE 50. Fig. 36 illustrates a configuration which is closer to an implementation example than that of Fig. 35. As illustrated in Fig. 36, the UE includes a radio equipment (RE) module 151 that performs processing related to a radio signal, a baseband (BB) processing module 152 that performs baseband signal processing, a device control module 153 that performs processing of a higher layer or the like, and a USIM slot 154 which is an interface for accessing a USIM card.

The RE module 151 performs digital-to-analog (D/A) conversion, modulation, frequency transform, power amplification, and the like on a digital baseband signal received from the BB processing module 152, and generates a radio signal to be transmitted from an antenna. Further, the RE module 151 performs frequency transform, analog to digital (A/D) conversion, demodulation, and the like on a received radio signal, generates a digital baseband signal, and transfers the digital baseband signal to the BB processing module 152. The RE module 151 includes, for example, the functions of the physical layer of the UL signal transmitting unit 52 and the DL signal receiving unit 51 in Fig. 35.

The BB processing module 152 performs a process of converting an IP packet into a digital baseband signal and vice versa. A digital signal processor (DSP) 162 is a processor that performs signal processing in the BB processing module 152. A memory 172 is used as a work area of the DSP 162. The BB processing module 152 has, for example, functions of the layer 2 and the like in the DL signal receiving unit 51 and the UL signal transmitting unit 52 of Fig. 35, the RRC processing unit 53, and the UE context management unit 54. All or some of the RRC processing unit 53 and the UE context management unit 54 may be included in the device control module 153.

The device control module 153 performs protocol processing of the IP layer, various kinds of application processing, and the like. A processor 163 is a processor that performs processing performed by the device control module 203. A memory 173 is used as a work area of the processor 163. Further, the processor 163 reads or writes data from or in the USIM via the USIM slot 154.

### <Base station eNB>

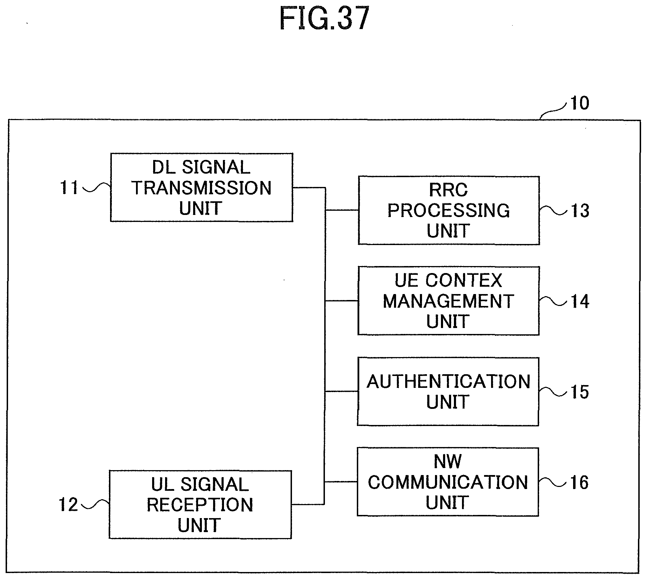

Fig. 37 illustrates a functional configuration diagram of the base station eNB (eNB 10). As illustrated in Fig. 37, the eNB 10 includes a DL signal transmitting unit 11, a UL signal receiving unit 12, an RRC processing unit 13, a UE context management unit 14, an authenticating unit 15, and an NW communication unit 16. Fig. 37 illustrates only functional units of the eNB particularly related to the embodiment of the present invention, and the eNB 10 also has functions (not illustrated) of performing at least operations conforming to the LTE scheme.

The DL signal transmitting unit 11 has a function of generating various kinds of signals of the physical layer from signals of a higher layer to be transmitted from the eNB 10 and transmitting the signals. The UL signal receiving unit 12 has a function of receiving various kinds of uplink signals from the user equipment UE and acquiring information of the higher layer from the received signal of the physical layer.

The RRC processing unit 13 performs the eNB side determination process, the generation and transmission of the RRC message and the broadcast information (the transmission is transmission via the DL signal transmitting unit 11), and interpretation of the RRC message received by the UL signal receiving unit 12, and the like which have been described above with reference to Figs. 7 to 10, 12, 13, and 15 to 22. Further, the transmission and reception of the MAC signal in the random access procedure described with reference to Figs. 8 to 10 and Fig. 21 may be performed through the DL signal transmitting unit 11 and the UL signal receiving unit 12. The RRC processing unit 13 has a function of resuming the RRC connection using the UE context retained in the UE context management unit 14.

The UE context management unit 14 includes a storage unit such as a memory and, for example, retains the UE context and the UE identifier (the S-TMSI or the like) in the RRC retention state/RRC idle state on the basis of the instruction described in step 107 of Fig. 5, Fig. 13, and the like. Further, in the procedure illustrated in Fig. 12, the UE context management unit 14 searches for the UE context on the basis of the UE identifier received from the UE, and when the UE context is checked to be retained, the UE context management unit 14 gives the notification indicating that the UE context is retained and the authentication information request to the RRC processing unit 13.

The authenticating unit 15 has a function of receiving the authentication information from the UE and authenticating the UE in step 503 illustrated in Fig. 12.

The NW communication unit 16 has a function of transmitting or receiving control signals to or from the MME through the S1-MME interface, a function of transmitting or receiving data to or from the S-GW through the Sl-U interface, a function of transmitting the connection retention instruction signal, a function of transmitting the RRC connection establishment complete, and the like.

The entire configuration of the eNB 10 illustrated in Fig. 37 may be implemented by a hardware circuit (for example, one or more IC chips), or a part of the configuration of the UE 50 may be implemented by a hardware circuit, and the remaining parts may be implemented by a CPU and a program.

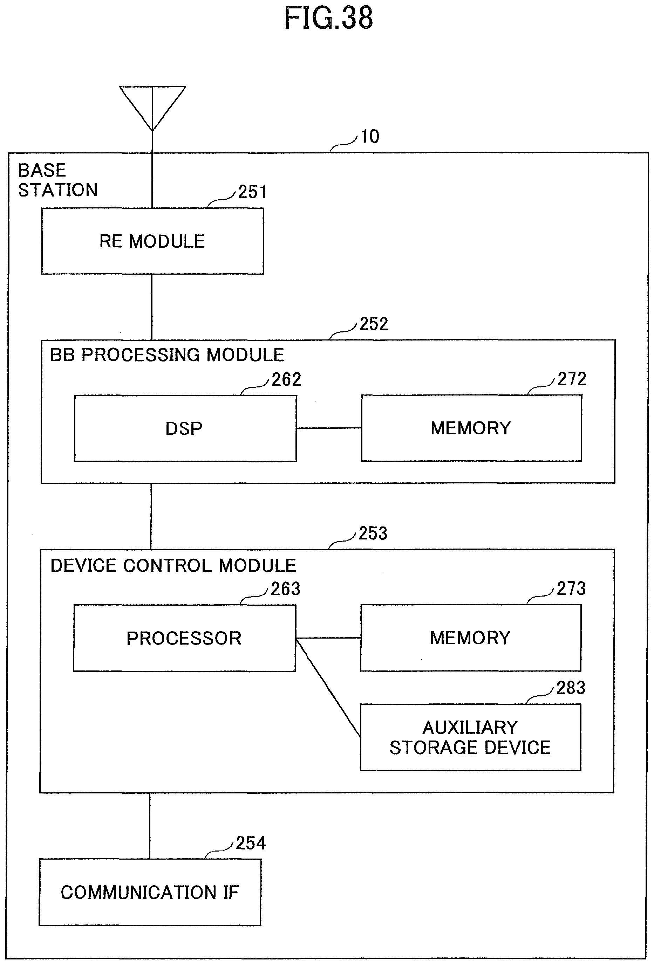

Fig. 38 is a diagram illustrating an example of the hardware (HW) configuration of the eNB 10. Fig. 38 illustrates a configuration which is closer to an implementation example than that of Fig. 37. As illustrated in Fig. 38, the base station eNB includes an RE module 251 that performs processing related to a radio signal, a BB processing module 252 that performs baseband signal processing, a device control module 253 that performs processing of a higher layer or the like, and a communication IF 254 which is an interface of a connection with a network.

The RE module 251 performs D/A conversion, modulation, frequency transform, power amplification, and the like on a digital baseband signal received from the BB processing module 252, and generates a radio signal to be transmitted from an antenna. Further, the RE module 251 performs frequency transform, analog to digital (A/D) conversion, demodulation, and the like on a received radio signal, generates a digital baseband signal, and transfers the digital baseband signal to the BB processing module 252. The RE module 251 has, for example, the functions of the physical layer in the DL signal transmitting unit 11 and the UL signal receiving unit 12 of Fig. 37.

The BB processing module 252 performs a process of converting an IP packet into a digital baseband signal and vice versa. A DSP 262 is a processor that performs signal processing in the BB processing module 252. A memory 272 is used as a work area of the DSP 252. The BB processing module 252 includes, for example, functions of the layer 2 in the DL signal transmitting unit 11 and the UL signal receiving unit 12, the RRC processing unit 13, the UE context management unit 14, and the authenticating unit 15, in Fig. 37. All or some of the functions of the RRC processing unit 13, the UE context management unit 14, and the authenticating unit 15 may be included in the device control module 253.

The device control module 253 performs protocol processing of the IP layer, OAM processing, and the like. A processor 263 is a processor that performs processing performed by the device control module 253. A memory 273 is used as a work area of the processor 263. An auxiliary storage device 283 is, for example, an HDD or the like, and stores various kinds of configuration information and the like for the operation of the base station eNB.

The configuration (function classification) of each of the devices illustrated in Figs. 34 to 38 are merely an example of a configuration for implementing the process described in the present embodiment (including the first and second modifications). An implementation method thereof (a specific arrangement of functional units, names thereof, and the like) is not limited to a specific implementation method as long as the process described in the present embodiment (including the first and second modifications) can be implemented.

### (Conclusion of embodiment)

As described above, according to the present embodiment, provided is a user equipment in a mobile communication system that supports a function of performing connection establishment reusing context information retained in each of the user equipment and a base station, including: a receiving unit that receives instruction information indicating whether or not the base station has a context retention function from the base station; a determining unit that determines whether or not the base station has the context retention function on the basis of the instruction information received through the receiving unit; and a transmitting unit that transmits a message including context retention information indicating that the user equipment retains user equipment side context information to the base station when the determining unit determines that the base station has the context retention function.

Through the above configuration, in the mobile communication system that supports a function of performing connection establishment reusing the context information retained in each of a user equipment and a base station, the user equipment can determine whether or not the base station has a function of reusing the context information. For example, the receiving unit receives the instruction information included in broadcast information or a Random Access Response.

Through this configuration, the user equipment can receive the instruction signal without introducing a new signal.

For example, the transmitting unit uses a resume ID in a scheme having a connection retention state as a state in which the context information is retained as the context retention information, and transmits a connection resume request message including the resume ID to the base station as the message.

According to this configuration, for example, in the scheme described in the Non-Patent Document 3, the user equipment can determine whether or not base station retrains the function of reusing the context information.

The transmitting unit may transmit a connection request message including the context retention information to the base station.

Through this configuration, it is possible to transmit the connection request message the base station which is confirmed to retrain the function of reusing the context information, and it is possible to reliably perform the connection establishment reusing the context information.

Further, according to the present embodiment, provided is a user equipment in a mobile communication system that supports a function of performing connection establishment reusing context information retained in each of the user equipment and a base station, including: a transmitting unit that transmits a connection request message including first context retention information indicating that the user equipment retains user equipment side context information to the base station; a determination unit that determines whether or not second context retention information indicating that the base station retains base station side context information associated with the user equipment is included in a connection setup message received from the base station; and a connecting unit that establishes a connection with the base station using the user equipment side context information when the determining unit determines that the second context retention information is included in the connection setup message.

Through the above configuration, in the mobile communication system that supports a function of performing connection establishment reusing the context information retained in each of a user equipment and a base station, the user equipment can determine whether or not the base station has a function of reusing the context information. Further, according to the present embodiment, provided is a base station in a mobile communication system that supports a function of performing connection establishment reusing context information retained in each of a user equipment and the base station, including: a transmitting unit that transmits instruction information indicating whether or not the base station has a context retention function to the user equipment; and a receiving unit that receives a message including context retention information indicating that the user equipment retains user equipment side context information when the user equipment determines that the base station has the context retention function on the basis of the instruction information from the user equipment.

Through the above configuration, in the mobile communication system that supports a function of performing connection establishment reusing the context information retained in each of a user equipment and a base station, the user equipment can determine whether or not the base station has a function of reusing the context information.

For example, the transmitting unit transmits the broadcast information or the Random Acess Response including the instruction information to the user equipment.

Through this configuration, the user equipment can receive the instruction signal without introducing a new signal.

The receiving unit may receive a connection request message including the context retention information from the user equipment.

Through this configuration, the base station which is confirmed to retrain the function of reusing the context information can receive the connection request message and can reliably perform the connection establishment reusing the context information.

As described above, according to the present embodiment, provided is a user equipment in a mobile communication system that supports a function of performing connection establishment reusing context information retained in each of the user equipment and a base station, including: a transmitting unit that transmits a connection request message including first context retention information indicating that the user equipment retains user equipment side context information to the base station; a receiving unit that receives a connection setup message including second context retention information indicating that the base station retains base station side context information associated with the user equipment from the base station; and a connecting unit that establishes a connection with the base station using the user equipment side context information after receiving the connection setup message.

Through the above configuration, in the mobile communication system that supports the function of performing connection establishment reusing context information retained in each of the user equipment and the base station, the base station can determine whether or not the user equipment retains the context information.

The connection setup message may include a transmission request of authentication information for the user equipment in addition to the second context retention information, and the transmitting unit may transmit the authentication information to the base station on the basis of the transmission request. Through this configuration the base station can establish the connection after authenticating the user equipment.

For example, the transmitting unit transmits a connection setup complete message including the authentication information to the base station. Through this configuration, it is unnecessary to transmit the authentication information through a special message, and the message can be reduced.

The receiving unit may receive a connection release message for causing the user equipment to transition from a connected state to an idle state from the base station and retain the user equipment side context information in a storage unit in the idle state when information for giving an instruction to retain the user equipment side context information is detected from the connection release message. Through this configuration, when the instruction is not received, the user equipment may not retain the user equipment side context information, and it is possible to prevent the user equipment side context information from being retained in vain.

Further, according to the present embodiment, provided is a base station in a mobile communication system that supports a function of performing connection establishment reusing context information retained in each of a user equipment and the base station, including: a receiving unit that receives a connection request message including first context retention information indicating that the user equipment retains user equipment side context information from the user equipment; a transmitting unit that transmits a connection setup message including second context retention information indicating that the base station retains base station side context information associated with the user equipment in accordance with reception of the first message; and a connecting unit that establishes a connection with the user equipment using the base station side context information after the connection setup message is transmitted.

Through the above configuration, in the mobile communication system that supports the function of performing connection establishment reusing context information retained in each of the user equipment and the base station, the base station can determine whether or not the user equipment retains the context information.

For example, the receiving unit acquires an identifier of the user equipment from the connection request message and searches for the base station side context information corresponding to the identifier from a plurality of pieces of retained base station side context information. As described above, it is possible to reliably detect the base station side context information associated with the user equipment using the identifier.

The connection setup message may include a transmission request of authentication information for the user equipment in addition to the second context retention information, and an authenticating unit that authenticates the user equipment using the authentication information transmitted from the user equipment on the basis of the transmission request may be further provided. Through this configuration, the base station can establish the connection after authenticating the user equipment.

The transmitting unit may include information for giving an instruction to retain the user equipment side context information in the connection release message for causing the user equipment to transition from a connected state to an idle state and transmit the connection release message to the user equipment. Through this configuration, when the instruction is not received, the user equipment may not retain the user equipment side context information, and it is possible to prevent the user equipment side context information from being retained in vain.

Further, "means" in the configuration of each of the above devices may be replaced with "unit", "circuit", "device", or the like.

The exemplary embodiment of the present invention has been described above, but the disclosed invention is not limited to the above embodiment, and those skilled in the art would understand that various modified examples, revised examples, alternative examples, substitution examples, and the like can be made. In order to facilitate understanding of the invention, specific numerical value examples have been used for description, but the numerical values are merely examples, and certain suitable values may be used unless otherwise stated. A classification of items in the above description is not essential to the present invention, matters described in two or more items may be combined and used as necessary, and a matter described in one item may be applied to a matter described in another item (unless inconsistent). The boundary between functional units or processing units in a functional block diagram does not necessarily correspond to the boundary between physical parts. Operations of a plurality of functional units may be performed physically by one component, or an operation of one functional unit may be performed physically by a plurality of parts. For the sake of convenience of description, each device has been described using the functional block diagrams, but each device may be implemented by hardware, software, or a combination thereof. Software executed by the processor included in the user equipment UE according to the embodiment of the present invention and software executed by the processor included in the base station eNB according to the embodiment of the present invention may be stored in a random access memory (RAM), a flash memory, a read only memory (ROM), an EPROM, an EEPROM, a register, a hard disk (HDD), a removable disk, a CD-ROM, a database, a server, or any other appropriate storage medium.

### <Supplement of Embodiment>

A notification of information is not limited to the aspect or embodiment described in this specification and may be given by any other method. For example, the notification of information may be given by physical layer signaling (for example, downlink control information (DCI) or uplink control information (UCI)), higher layer signaling (for example, RRC signaling, MAC signaling, broadcast information (master information block (MIB), system information block (SIB))), other signals, or a combination thereof. Further, the RRC message may be referred to as "RRC signaling." Further, the RRC message may be, for example, an RRC connection setup message, an RRC connection reconfiguration message, or the like.

Each aspect and embodiment of the present invention may be applied to LTE, LTE-A, SUPER 3G, IMT-advanced, 4G, 5G, Future Radio Access (FRA), W-CDMA (registered trademark), GSM (registered trademark), CDMA 2000, Ultra Mobile Broadband (UMB), IEEE 802.11 (Wi-Fi), IEEE 802.16 (WiMAX), IEEE 802.20, Ultra-WideBand (UWB), Bluetooth (registered trademark), a system using any other appropriate system, and/or next generation systems extended on the basis of these standards.

The determination may be performed in accordance with a value (0 or 1) indicated by one bit, may be performed in accordance with a Boolean value (true or false), or may be performed by a comparison of numerical values (for example, a comparison with a predetermined value).

The terms described in this specification and/or terms necessary for understanding this specification may be replaced with terms having the same or similar meanings. For example, a channel and/or a symbol may be a signal. Further, a signal may be a message.

The mobile station UE may be a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, it may also be referred to as a remote terminal, handset, user agent, mobile client, client, or some other suitable term.

The terms "determining" and "deciding" used in this specification may include a wide variety of actions. For example, "determining" and "deciding" may include, for example, events in which events such as calculating, calculating, computing, processing, deriving, investigating, looking up (for example, looking up in a table, a database, or another data structure), or ascertaining are regarded as "determining" or "deciding." Further, "determining" and "deciding" may include, for example, events in which events such as receiving (for example, receiving information), transmitting (for example, transmitting information), input, output, or accessing (for example, accessing data in a memory) are regarded as "determining" or "deciding." Further, "determining" and "deciding" may include, for example, events in which events such as resolving, selecting, choosing, establishing, or comparing are regarded as "determining" or "deciding." In other words, "determining" and "deciding" may include events in which a certain operation is regarded as "determining" or "deciding."

A phrase "on the basis of" used in this specification is not limited to "on the basis of only" unless otherwise stated. In other words, a phrase "on the basis of" means both "on the basis of only" and "on the basis of at least."

The processing procedures, the sequences, and the like of the respective aspects/embodiments described in this specification may be reversed in order unless there is a contradiction. For example, the method described in this specification presents elements of various steps in an exemplary order and is not limited to a presented specific order.

Input and output information and the like may be stored in a specific place (for example, a memory) or may be managed through a management table. Input and output information and the like may be overwritten, updated, or additionally written. Output information and the like may be deleted. Input information and the like may be transmitted to another device.

Information, signals, and the like described in this specification may be indicated using any one of a variety of different techniques. For example, data, instructions, commands, information, signals, bits, symbols, chips, and the like which are mentioned throughout the above description may be indicated by voltages, currents, electromagnetic waves, magnetic particles, optical fields or photons, or an arbitrary combination thereof.

Further, information, parameters, and the like described in this specification may be indicated by absolute values, may be indicated by relative values from predetermined values, or may be indicated by corresponding other information.

This application claims the benefit of Japanese Priority Patent Application JP 2015-218015 filed November 5, 2015, Japanese Priority Patent Application JP 2016-96521 filed May 12, 2016, and Japanese Priority Patent Application JP 2016-139715 filed July 14, 2016.

### EXPLANATIONS OF LETTERS OR NUMERALS

- 10, 20: eNB
- 11: DL signal transmitting unit
- 12: UL signal receiving unit
- 13: RRC processing unit
- 14: UE context management unit
- 15: authenticating unit
- 16: NW communication unit
- 30: MME
- 31: eNB communication unit
- 32: SGW communication unit
- 33: communication control unit
- 40: S-GW
- 41: eNB communication unit
- 42: MME communication unit
- 43: NW communication unit
- 44: communication control unit
- 50: UE
- 51: DL signal receiving unit
- 52: UL signal transmitting unit
- 53: RRC processing unit
- 54: UE context management unit
- 151: RE module
- 152: BB processing module
- 153: device control module
- 154: USIM slot
- 251: RE module
- 252: BB processing module
- 253: device control module
- 254: communication IF

## Claims

1. A user equipment (50) for a mobile communication system that supports a function of performing connection establishment reusing context information retained in each of the user equipment (50) and a base station (10, 20), comprising:
a receiving unit (51) configured to receive, from the base station (10, 20), a system information block type 2 (SIB2) including instruction information indicating whether or not the base station (10, 20) has a function of performing RRC connection by reusing retained context;
a determining unit (53) configured to determine whether or not the base station (10, 20) has the function on the basis of the instruction information received through the receiving unit; and
a transmitting unit (52) configured to transmit a message including context retention information indicating that the user equipment (50) retains user equipment side context information to the base station (10, 20) when the determining unit (53) determines that the base station (10, 20) has the function.

2. The user equipment (50) as claimed in claim 1,
wherein the transmitting unit (52) is configured to use a resume ID in a scheme having a connection retention state as a state in which the context information is retained as the context retention information, and to transmit a connection resume request message including the resume ID to the base station (10, 20) as the message.

3. A base station (10, 20) for a mobile communication system that supports a function of performing connection establishment reusing context information retained in each of a user equipment (50) and the base station (10, 20), comprising:
a transmitting unit (11) configured to transmit, to the user equipment (50), a system information block type 2 (SIB2) including instruction information indicating whether or not the base station (10, 20) has a function of performing an RRC connection by reusing retained context; and
a receiving unit (12) configured to receive, from the user equipment (50), a message including context retention information indicating that the user equipment (50) retains user equipment side context information when the user equipment (50) determines that the base station (10, 20) has the function on the basis of the instruction information.

4. The base station (10, 20) as claimed in claim 3,
wherein the receiving unit (12) receives a connection resume request message including a resume ID from the user equipment (50) as the message.

5. A connection establishment method performed by a user equipment (50) in a mobile communication system that supports a function of performing connection establishment reusing context information retained in each of the user equipment (50) and a base station (10, 20), the connection establishment method comprising:
a reception step (S201) of receiving, from the base station (10, 20), a system information block type 2 (SIB2) including instruction information indicating whether or not the base station (10, 20) has a function of performing RRC connection by reusing retained context;
a determination step (S202) of determining whether or not the base station (10, 20) has the function on the basis of the instruction information received in the reception step; and
a transmission step (S203) of transmitting a message including context retention information indicating that the user equipment (50) retains user equipment side context information to the base station (10, 20) when the base station (10, 20) is determined to have the function in the determination step.

6. A connection establishment method performed by a base station (10, 20) in a mobile communication system that supports a function of performing connection establishment reusing context information retained in each of a user equipment (50) and the base station (10, 20), the connection establishment method comprising:
a transmission step (S301) of transmitting, to the user equipment (50), a system information block type 2 (SIB2) including instruction information indicating whether or not the base station (10, 20) has a function of performing an RRC connection by reusing retained context; and
a reception step (S302) of receiving, from the user equipment (50), a message including context retention information indicating that the user equipment (50) retains user equipment side context information when the user equipment (50) determines that the base station (10, 20) has the function on the basis of the instruction information.

## Patentansprüche

1. Benutzerendgerät (50) für ein Mobilkommunikationssystem, das eine Funktion zum Durchführen von Verbindungseinrichtung unter erneutem Verwenden von Kontextinformationen, die sowohl von dem Benutzerendgerät (50) als auch einer Basisstation (10, 20) aufbewahrt werden, unterstützt, umfassend:
eine Empfangseinheit (51), die konfiguriert ist, von der Basisstation (10, 20) einen Systeminformationsblock Typ 2 (SIB2) zu empfangen, der Anweisungsinformationen beinhaltet, die angeben, ob die Basisstation (10, 20) eine Funktion zum Durchführen von RRC-Verbindung unter erneutem Verwenden aufbewahrten Kontextes aufweist oder nicht;
eine Ermittlungseinheit (53), die konfiguriert ist, auf der Basis der Anweisungsinformationen, die durch die Empfangseinheit empfangen werden, zu ermitteln, ob die Basisstation (10, 20) die Funktion aufweist oder nicht; und
eine Sendeeinheit (52), die konfiguriert ist, eine Nachricht, die Kontextaufbewahrungsinformationen beinhaltet, die angeben, dass das Benutzerendgerät (50) benutzerendgerätseitige Kontextinformationen aufbewahrt, an die Basisstation (10, 20) zu senden, wenn die Ermittlungseinheit (53) ermittelt, dass die Basisstation (10, 20) die Funktion aufweist.

2. Benutzerendgerät (50) nach Anspruch 1,
wobei die Sendeeinheit (52) konfiguriert ist, eine Weiterführungskennung in einem Schema zu verwenden, das einen Verbindungsaufbewahrungszustand aufweist, wenn ein Zustand, in dem die Kontextinformationen als die Kontextaufbewahrungsinformationen aufbewahrt werden, und eine Verbindungsweiterführungsanfragenachricht, die die Weiterführungskennung beinhaltet, als die Nachricht an die Basisstation (10, 20) zu senden.

3. Basisstation (10, 20) für ein Mobilkommunikationssystem, das eine Funktion zum Durchführen von Verbindungseinrichtung unter erneuter Verwendung von Kontextinformationen, die sowohl von dem Benutzerendgerät (50) als auch der Basisstation (10, 20) aufbewahrt werden, unterstützt, umfassend:
eine Sendeeinheit (11), die konfiguriert ist, einen Systeminformationsblock Typ 2 (SIB2), der Anweisungsinformationen beinhaltet, die angeben, ob die Basisstation (10, 20) eine Funktion zum Durchführen einer RRC-Verbindung aufweist oder nicht, an das Benutzerendgerät (50) zu senden, indem aufbewahrter Kontext erneut verwendet wird; und
eine Empfangseinheit (12), die konfiguriert ist, von dem Benutzerendgerät (50) eine Nachricht zu empfangen, die Kontextaufbewahrungsinformationen beinhaltet, die angeben, dass das Benutzerendgerät (50) benutzerendgerätseitige Kontextinformationen aufbewahrt, wenn das Benutzerendgerät (50) auf der Basis der Anweisungsinformationen ermittelt, dass die Basisstation (10, 20) die Funktion aufweist.

4. Basisstation (10, 20) nach Anspruch 3,
wobei die Empfangseinheit (12) eine Verbindungsweiterführungsanfragenachricht, die eine Weiterführungskennung beinhaltet, von dem Benutzerendgerät (50) als die Nachricht empfängt.

5. Verbindungseinrichtungsverfahren, das von einem Benutzerendgerät (50) in einem Mobilkommunikationssystem durchgeführt wird, das eine Funktion zum Durchführen von Verbindungseinrichtung unter erneutem Verwenden von Kontextinformationen, die in sowohl dem Benutzerendgerät (50) als auch einer Basisstation (10, 20) aufbewahrt werden, unterstützt, wobei das Verbindungseinrichtungsverfahren Folgendes umfasst:
einen Empfangsschritt (S201) zum Empfangen, von der Basisstation (10, 20), eines Systeminformationsblocks Typ 2 (SIB2), der Anweisungsinformationen beinhaltet, die angeben, ob die Basisstation (10, 20) eine Funktion zum Durchführen von RRC-Verbindung unter erneutem Verwenden aufbewahrten Kontextes aufweist oder nicht;
einen Ermittlungsschritt (S202) zum Ermitteln, ob die Basisstation (10, 20) die Funktion aufweist oder nicht, auf der Basis der Anweisungsinformationen, die in dem Empfangsschritt empfangen wurden; und
einen Sendeschritt (S203) zum Senden einer Nachricht, die Kontextaufbewahrungsinformationen beinhaltet, die angeben, dass das Benutzerendgerät (50) benutzerendgerätseitige Kontextinformationen aufbewahrt, an die Basisstation (10, 20), wenn in dem Ermittlungsschritt ermittelt wurde, dass die Basisstation (10, 20) die Funktion aufweist.

6. Verbindungseinrichtungsverfahren, das von einer Basisstation (10, 20) in einem Mobilkommunikationssystem durchgeführt wird, das eine Funktion zum Durchführen von Verbindungseinrichtung unter erneutem Verwenden von Kontextinformationen, die sowohl in einem Benutzerendgerät (50) als auch der Basisstation (10, 20) aufbewahrt werden, unterstützt, wobei das Verbindungseinrichtungsverfahren Folgendes umfasst:
einen Sendeschritt (S301) zum Senden, an das Benutzerendgerät (50), eines Systeminformationsblocks Typ 2 (SIB2), der Anweisungsinformationen beinhaltet, die angeben, ob die Basisstation (10, 20) eine Funktion zum Durchführen von RRC-Verbindung unter erneutem Verwenden aufbewahrten Kontextes aufweist oder nicht; und
einen Empfangsschritt (S302) zum Empfangen, von dem Benutzerendgerät (50), einer Nachricht, die Kontextaufbewahrungsinformationen beinhaltet, die angeben, dass das Benutzerendgerät (50) benutzerendgerätseitige Kontextinformationen aufbewahrt, wenn das Benutzerendgerät (50) auf der Basis der Anweisungsinformationen ermittelt, dass die Basisstation (10, 20) die die Funktion aufweist.

## Revendications

1. Équipement utilisateur (50) pour un système de communication mobile qui prend en charge une fonction d'exécution d'établissement de connexion en réutilisant des informations de contexte conservées dans chacun de l'équipement utilisateur (50) et d'une station de base (10, 20), comprenant :
une unité de réception (51) configurée pour recevoir, en provenance de la station de base (10, 20), un bloc d'informations système de type 2 (SIB2) incluant des informations d'instructions indiquant si la station de base (10, 20) possède ou non une fonction d'exécution de connexion RRC en réutilisant un contexte conservé ;
une unité de détermination (53) configurée pour déterminer si la station de base (10, 20) possède ou non la fonction sur la base des informations d'instructions reçues par l'intermédiaire de l'unité de réception ; et
une unité d'émission (52) configurée pour émettre, vers la station de base (10, 20), un message incluant des informations de conservation de contexte indiquant que l'équipement utilisateur (50) conserve des informations de contexte côté équipement utilisateur quand l'unité de détermination (53) détermine que la station de base (10, 20) possède la fonction.

2. Équipement utilisateur (50) selon la revendication 1,
dans lequel l'unité d'émission (52) est configurée pour utiliser un ID de reprise dans un schéma présentant un état de conservation de connexion comme un état dans lequel les informations de contexte sont conservées au titre des informations de conservation de contexte, et pour émettre, vers la station de base (10, 20), un message de demande de reprise de connexion incluant l'ID de reprise au titre du message.

3. Station de base (10, 20) pour un système de communication mobile qui prend en charge une fonction d'exécution d'établissement de connexion en réutilisant des informations de contexte conservées dans chacun d'un équipement utilisateur (50) et de la station de base (10, 20), comprenant :
une unité d'émission (11) configurée pour émettre, vers l'équipement utilisateur (50), un bloc d'informations système de type 2 (SIB2) incluant des informations d'instructions indiquant si la station de base (10, 20) possède ou non une fonction d'exécution de connexion RRC en réutilisant un contexte conservé ; et
une unité de réception (12) configurée pour recevoir, en provenance de l'équipement utilisateur (50), un message incluant des informations de conservation de contexte indiquant que l'équipement utilisateur (50) conserve des informations de contexte côté équipement utilisateur quand l'équipement utilisateur (50) détermine que la station de base (10, 20) possède la fonction sur la base des informations d'instructions.

4. Station de base (10, 20) selon la revendication 3,
dans laquelle l'unité de réception (12) reçoit, en provenance de l'équipement utilisateur (50), un message de demande de reprise de connexion incluant un ID de reprise au titre du message.

5. Procédé d'établissement de connexion exécuté par un équipement utilisateur (50) dans un système de communication mobile qui prend en charge une fonction d'exécution d'établissement de connexion en réutilisant des informations de contexte conservées dans chacun de l'équipement utilisateur (50) et d'une station de base (10, 20), le procédé d'établissement de connexion comprenant :
une étape de réception (S201) consistant à recevoir, en provenance de la station de base (10, 20), un bloc d'informations système de type 2 (SIB2) incluant des informations d'instructions indiquant si la station de base (10, 20) possède ou non une fonction d'exécution de connexion RRC en réutilisant un contexte conservé ;
une étape de détermination (S202) consistant à déterminer si la station de base (10, 20) possède ou non la fonction sur la base des informations d'instructions reçues à l'étape de réception ; et
une étape d'émission (S203) consistant à émettre, vers la station de base (10, 20), un message incluant des informations de conservation de contexte indiquant que l'équipement utilisateur (50) conserve des informations de contexte côté équipement utilisateur lorsque, à l'étape de détermination, il est déterminé que la station de base (10, 20) possède la fonction.

6. Procédé d'établissement de connexion exécuté par une station de base (10, 20) dans un système de communication mobile qui prend en charge une fonction d'exécution d'établissement de connexion en réutilisant des informations de contexte conservées dans chacun d'un équipement utilisateur (50) et de la station de base (10, 20), le procédé d'établissement de connexion comprenant :
une étape d'émission (S301) consistant à émettre, vers l'équipement utilisateur (50), un bloc d'informations système de type 2 (SIB2) incluant des informations d'instructions indiquant si la station de base (10, 20) possède ou non une fonction d'exécution de connexion RRC en réutilisant un contexte conservé ; et
une étape de réception (S302) consistant à recevoir, en provenance de l'équipement utilisateur (50), un message incluant des informations de conservation de contexte indiquant que l'équipement utilisateur (50) conserve des informations de contexte côté équipement utilisateur quand l'équipement utilisateur (50) détermine que la station de base (10, 20) possède la fonction sur la base des informations d'instructions.
